# EUROPÄISCHE PATENTSCHRIFT

(11) **EP 4 128 670 B1**
(45) Veröffentlichungstag und Bekanntmachung des Hinweises auf die Patenterteilung: **14.02.2024**
(21) Anmeldenummer: 21727456.2
(22) Anmeldetag: 19.05.2021
(51) Int. Cl.: H04L 12/40

(54) **PROTOKOLLUMSETZER UND AUTOMATISIERUNGSSYSTEM**
PROTOCOL CONVERTER AND AUTOMATION SYSTEM
CONVERTISSEUR DE PROTOCOLE ET SYSTÈME D'AUTOMATISATION

(30) Priorität: 19.05.2020 DE 102020113572
(43) Veröffentlichungstag der Anmeldung: 08.02.2023
(73) Patentinhaber: Beckhoff Automation GmbH, 33415 Verl (DE)
(72) Erfinder: BÜTTNER, Holger, 12205 Berlin (DE); SACHS, Jens, 32469 Petershagen (DE); SCHLOTTHAUER, Daniel, 13127 Berlin (DE); ZUTZ, Robert, 33415 Verl (DE)
(74) Vertreter: Patentanwaltskanzlei WILHELM & BECK
(86) Internationale Anmeldenummer: PCT/EP2021/063320
(87) Internationale Veröffentlichungsnummer: WO 2021/234013

(56) Entgegenhaltungen:
- EP-A1- 1 701 270
- DE-A1- 19 928 517
- DE-A1-102014 110 017

## Beschreibung

Die Erfindung betrifft einen Protokollumsetzer und ein Automatisierungssystem mit einem solchen Protokollumsetzer.

Diese Patentanmeldung beansprucht die Priorität der deutschen Patentanmeldung 10 2020 113 572.6.

Moderne Konzepte der Industrieautomation, d. h. der Steuerung und Überwachung von technischen Prozessen mit Hilfe von Software, beruhen auf der Idee einer zentralen Steuerung bei gleichzeitig verteilter Sensor-/Aktorebene. Ein Bussystem, im Weiteren als Feldbussystem bezeichnet, verbindet dabei die Feldgeräte wie Messfühler (Sensoren) und Stellglieder (Aktoren) mit einem Automatisierungsgerät.

Damit die Teilnehmer am Feldbus ihre Nachrichten über dieselbe Leitung senden können, wird für die Nachrichtenübertragung zwischen den Teilnehmern ein normiertes Protokoll, im Weiteren als Feldbus-Protokoll bezeichnet, verwendet, das festlegt, wer (Kennung) was (Messwert, Befehl) wann (Initiative) auf dem Feldbus ausgibt.

Feldbussysteme sind heute fester Bestandteil jeder Fertigungsanlage. Dabei werden je nach Hersteller verschiedene Feldbustechnologien favorisiert, die sich in Bezug auf die Verbindungsstruktur, den Buszugang und das normierte Feldbus-Protokoll unterscheiden. In vielen Fertigungsanlagen stellt sich deshalb die Anforderung, die verschiedenen eingesetzten Feldbustechnologien zu einer gemeinsamen Feldbuslösung zu verbinden. Eine solche Integration wird mit Hilfe von Protokollumsetzern, im Weiteren auch als Gateways bezeichnet, realisiert.

Gateways können unterschiedliche, auch heterogene Netzwerke miteinander verbinden und ermöglichen ein Routing über Netzwerkgrenzen hinweg. Das Gateway stellt dabei einen gemeinsamen Knoten dar, der zu den zu verbindenden Netzwerken gehört und den netzübergreifenden Datenverkehr abwickelt. Gateways nehmen beim Übergang von einem Netzwerk zum anderen Netzwerk eine Protokollumsetzung vor und konvertieren eingehende Daten. Vom Zielnetzwerk nicht unterstützte Protokolldaten können dabei im Gateway wegfallen, zusätzliche für den Weitertransport nötige Protokolldaten vom Gateway ergänzt werden.

Eine wesentliche Anforderung an ein Automatisierungssystem ist die Fehlersicherheit.

Beim Steuern und Überwachen von technischen Prozessen muss sichergestellt sein, dass dann, wenn das Automatisierungssystem fehlerhaft arbeitet, daraus keine Gefahr für Mensch und Umwelt resultiert.

Für eine Übertragung von sicherheitsrelevanten Nachrichten zwischen sicherheitsrelevanten Kommunikationsteilnehmern in einem Feldbussystem wird deshalb ein sicherheitszertifiziertes Feldbus-Protokoll, im Weiteren als Sicherheits-Feldbus-Protokoll bezeichnet, eingesetzt. Ein solches Sicherheits-Feldbus-Protokoll, allgemein, dann, wenn kein Bezug auf einen Feldbus gegeben ist, auch als Sicherheitskommunikationsprotokoll bezeichnet, ermöglicht eine sichere Nachrichtenübertragung auf dem Feldbus, auch dann, wenn sich zwischen den beiden sicherheitsrelevanten Kommunikationsteilnehmern im Übertragungsweg beliebig viele unsichere Feldbusgeräte befinden und der Übertragungsweg also einen sogenannten Black Channel bildet.

Die Normen EN ISO 13849-1 und IEC/EN 62061 spezifizieren die zur Risikoreduzierung erforderliche sicherheitstechnische Leistungsfähigkeit von Automatisierungssystemen. Um die gewünschte sicherheitstechnische Leistungsfähigkeit zu erreichen, haben die sicherheitszertifizierte Feld- und Automatisierungsgeräte, die die sicherheitsrelevanten Teilnehmer im Netzwerk bilden und bei denen ein Sicherheits-Feldbus-Protokoll eingesetzt wird, in der Regel eine wenigstens zweikanalige Hardware. Alternativ kann auch einkanalige Hardware verwendet werden, wenn die Software wenigstens zweikanalig aufgebaut ist.

Um eine Kommunikation zwischen sicherheitsrelevanten Teilnehmern in Netzwerken, die unterschiedliche Sicherheits-Feldbus-Protokolle unterstützen, zu ermöglichen, werden zusätzlich zu den herkömmlichen Gateways dann auch Sicherheits-Gateways mit zweikanaliger Hardware oder Software realisiert.

Eine zweikanalige Hardware hat allerdings erhöhte Hardware-Kosten. Eine zweikanalige Software erfordert dagegen einen leistungsfähigen Mikroprozessor sowie ausreichend Speicher.

Die DE 10 2014 110017 A1 offenbart einen Protokollumsetzer mit den Merkmalen des Oberbegriffs des Anspruchs 1. Weiterer Stand der Technik ist aus DE199 28 517 A1 und EP 1701270 A1 bekannt.

Aufgabe der Erfindung ist es, einen Protokollumsetzer für einen netzwerkübergreifenden Datenverkehr von sicherheitsrelevanten Nachrichten und ein entsprechendes Automatisierungssystem bereitzustellen, die kostengünstig realisiert werden können.

Diese Aufgabe wird mit einem Protokollumsetzer nach Anspruch 1 und einem Automatisierungssystem nach Anspruch 8 gelöst. Bevorzugte Weiterbildungen sind in den abhängigen Ansprüchen angegeben.

In einem Automatisierungssystem mit einem ersten Netzwerk und einem zweiten Netzwerk, bei dem das erste und zweite Netzwerk unterschiedliche Netzwerkprotokolle zum Nachrichtenaustausch verwenden, und bei dem das erste Netzwerk wenigstens einen ersten Teilnehmer mit einer ersten Sicherheitskommunikationsschicht aufweist, die ein erstes Sicherheitskommunikationsprotokoll verarbeitet, und bei dem das zweite Netzwerk wenigstens einen zweiten Teilnehmer mit einer zweiten Sicherheitskommunikationsschicht aufweist, die ein zweites Sicherheitskommunikationsprotokoll verarbeitet, ist zwischen dem ersten und dem zweiten Netzwerk ein Protokollumsetzer zum Umsetzen von sicherheitsrelevanten Nachrichten zwischen dem ersten und dem zweiten Netzwerk vorgesehen. Der Protokollumsetzer weist eine einkanalige Schnittstellen-Einrichtung, die einen Nachrichtenaustausch mit dem ersten Netzwerk und/ oder mit dem zweiten Netzwerk ermöglicht, auf. Eine mit der Schnittstellen-Einrichtung verbundene einkanalige Filter-Modul-Einrichtung ermittelt aus von der Schnittstellen-Einrichtung empfangenen Nachrichten Nachrichten mit dem ersten Sicherheitskommunikationsprotokoll und Nachrichten mit dem zweiten Sicherheitskommunikationsprotokoll. Ein mit der Filter-Modul-Einrichtung verbundenes wenigstens zweikanaliges Sicherheits-Modul setzt dann die von der Filter-Modul-Einrichtung ermittelten Nachrichten mit dem ersten Sicherheitskommunikationsprotokoll in Nachrichten mit dem zweiten Sicherheitskommunikationsprotokoll beziehungsweise die von der Filter-Modul-Einrichtung ermittelten Nachrichten mit dem zweiten Sicherheitskommunikationsprotokoll in Nachrichten mit dem ersten Sicherheitskommunikationsprotokoll um.

Der Protokollumsetzer für einen netzübergreifenden Datenverkehr von sicherheitsrelevanten Nachrichten im Automatisierungssystem kann im Wesentlichen einkanalig realisiert werden. Nur die sicherheitsrelevanten Routinen sind wenigstens zweikanalig ausgelegt. Das hat den Vorteil, dass die Hardware- beziehungsweise Softwarekosten für einen zweiten Kanal weitgehend eingespart werden können.

Die einkanalige Schnittstellen-Einrichtung weist eine einkanalige erste Schnittstelle, die einen Nachrichtenaustausch mit dem ersten Netzwerk ermöglicht, das den wenigstens einen ersten Teilnehmer mit der ersten Sicherheitskommunikationsschicht aufweist, die das erste Sicherheitskommunikationsprotokoll verarbeitet, und eine einkanalige zweite Schnittstelle, die einen Nachrichtenaustausch mit dem zweiten Netzwerk ermöglicht, das den wenigstens zweiten Teilnehmer mit der zweiten Sicherheitskommunikationsschicht aufweist, die das zweite Sicherheitskommunikationsprotokoll verarbeiten, auf. Ferner weist die Filter-Modul-Einrichtung ein einkanaliges erstes Filter-Modul, um aus von der ersten Schnittstelle empfangenen Nachrichten Nachrichten mit dem ersten Sicherheitskommunikationsprotokoll zu ermitteln, und ein einkanaliges zweites Filter-Modul, um aus von der zweiten Schnittstelle empfangenen Nachrichten Nachrichten mit dem zweiten Sicherheitskommunikationsprotokoll zu ermitteln, auf. Das wenigstens zweikanalige Sicherheits-Modul ist mit dem ersten und dem zweiten Filter-Modul verbunden, um vom ersten Filter-Modul ermittelte Nachrichten mit dem ersten Sicherheitskommunikationsprotokoll in Nachrichten mit dem zweiten Sicherheitskommunikationsprotokoll beziehungsweise um vom zweiten Filter-Modul ermittelte Nachrichten mit dem zweiten Sicherheitskommunikationsprotokoll in Nachrichten mit dem ersten Sicherheitskommunikationsprotokoll umzusetzen.

Diese Auslegung ermöglicht eine integrierte Protokollumsetzung, bei der sowohl eine Protokollumwandlung von nicht-sicherheitsrelevanten Nachrichten als auch von sicherheitsrelevanten Nachrichten in einem einzelnen Protokollumsetzer realisierbar ist.

Das zweikanalige Sicherheits-Modul kann wenigstens zwei parallele Software-Funktionskanäle aufweisen. Im Protokollumsetzer kann dann ein kostengünstiger Mikrocontroller, der vergleichsweise wenig Speicher benötigt, da nur wenige sicherheitsrelevante Software-Funktionen zweikanalig realisiert werden müssen, eingesetzt werden.

Im Protokollumsetzer kann ein mit der Filter-Modul-Einrichtung und dem Sicherheits-Modul verbundenes einkanaliges Betriebsfunktions-Modul vorgesehen sein, um die Filter-Modul-Einrichtung und das Sicherheits-Modul zyklisch aufzurufen. Diese Auslegung sorgt für eine stabile Funktionsweise des Protokollumsetzers.

Nachfolgend wird die Erfindung anhand von Figuren näher erläutert.

Fig. 1 zeigt ein Automatisierungssystem mit einem Sicherheits-Gateway zwischen einem EtherCAT-Netzwerk und einem PROFINET-Netzwerk, wobei das EtherCAT-Netzwerk einen Teilnehmer mit einer Sicherheitskommunikationsschicht aufweist, die ein FSoE-Kommunikationsprotokoll verarbeitet, und das PROFINET-Netzwerk einen Teilnehmer mit einer Sicherheitskommunikationsschicht aufweist, die ein PROFIsafe-Kommunikationsprotokoll verarbeitet.

Fig. 2 zeigt den schematischen Aufbau des Sicherheits-Gateways im Automatisierungssystem aus Fig. 1.

Fig. 3 zeigt einen Ablauf einer Übertragung einer sicherheitsrelevanten Nachricht im Automatisierungssystem aus Fig. 1 vom FSoE-Safety-Teilnehmer im EtherCAT-Netzwerk zum PROFIsafe-Safety-Teilnehmer im PROFINET-Netzwerk.

Fig. 4 zeigt einen Ablauf einer Übertragung einer sicherheitsrelevanten Nachricht im Automatisierungssystem aus Fig. 1 vom PROFIsafe-Safety-Teilnehmer im PROFINET-Netzwerk zum FSoE- Safety-Teilnehmer im EtherCAT-Netzwerk.

Fig. 5 zeigt den schematischen Aufbau eines Sicherheits-Gateways mit einer EtherCAT-Schnittstelle und einer I/O-Link-Schnittstelle.

Fig. 6 zeigt den schematischen Aufbau eines Sicherheits-Gateways mit einer EtherCAT-Schnittstelle und einer allgemeinen Hardware-Schnittstelle.

Die Figuren sind lediglich schematischer Natur und nicht maßstabsgetreu. Ferner sind die Bezugszeichen in den Figuren unverändert gewählt, wenn es sich um gleich ausgebildete Elemente oder Komponenten handelt.

In der Industrieautomation werden Netzwerke eingesetzt, um verteilt angeordnete Feldgeräte einer Sensor-/Aktorebene mit einer Steuerungsebene zu verbinden. Die Automatisierungsnetzwerke, auch Feldbussysteme genannt, weisen in der Regel einen seriellen Bus auf, an dem die Netzwerkteilnehmer angeschlossen sind. Dabei werden von den Herstellern verschiedene Feldbuskonzepte eingesetzt, die sich in Bezug auf die Verbindungsstruktur, den Buszugang und das normierte Feldbusprotokoll, im Weiteren allgemein, dann, wenn kein Bezug auf einen Feldbus gegeben ist, auch als Netzwerkprotokoll bezeichnet, unterscheiden.

Das Netzwerkprotokoll legt fest, wie der Datenaustausch zwischen den Teilnehmern am Netzwerk durchgeführt werden soll. Dabei bestimmt das Netzwerkprotokoll die Regeln und Formate für das Kommunikationsverhalten der Teilnehmer. Das Netzwerkprotokoll hat in der Regel eine Schichtenarchitektur, wobei die einzelnen Protokollschichten im OSI-Referenzmodell definiert sind.

Der vom Netzwerkprotokoll festgelegte Nachrichtenaufbau enthält alle für den Datenaustausch wichtigen Informationen, wie Absender und Empfänger, Nachrichtentyp, Nachrichtengröße und Prüfsumme zum Nachvollziehen einer fehlerfreien Übertragung. Diese Informationen werden den Nutzdaten in der Nachricht als Header vorangestellt oder als Trailer angehängt.

Die möglichen Netzwerkprotokolle können sich an verschiedenen Punkten unterscheiden. So kann im Netzwerkprotokoll festgelegt sein, dass die Kommunikation nur in eine Richtung stattfinden darf oder auch dass gleichzeitig eine Kommunikation in beide Richtungen möglich ist. Weiterhin kann das Netzwerkprotokoll bestimmen, dass die Kommunikation mit einem Taktsignal synchronisiert wird oder asynchron erfolgen soll. Das Netzwerkprotokoll kann darüber hinaus die Anzahl der Teilnehmer, die an der Kommunikation teilnehmen dürfen, festlegen. Auch kann das Netzwerkprotokoll bestimmen, dass eine Übermittlung an nur einen Empfänger, eine Übertragung an mehrere Empfänger oder auch eine Nachrichtenübertragung an alle Teilnehmer erfolgen soll.

Weiterhin können sich die Netzwerkprotokolle in Bezug auf die Stellung der Teilnehmer unterscheiden. Wenn alle Teilnehmer gleichberechtigt sind, erfolgt eine symmetrische Kommunikation, andernfalls eine asymmetrische Kommunikation. Bei Netzwerkprotokollen wird auch zwischen einer synchronen Kommunikation, bei der nach einer Anfrage auf eine Antwort gewartet wird, und einer asynchronen Kommunikation, bei der keine Antwort erfolgen muss, unterschieden. Das Netzwerkprotokoll kann eine paketorientierte Kommunikation ausführen oder auch verbindungsorientiert ausgelegt sein.

Als Kommunikationsstandard für Netzwerke mit kurzer Reichweite, insbesondere auch Automatisierungsnetzwerken hat sich das Ethernet-Protokoll etabliert. Im Rahmen des OSI-Schichtenmodells legt das Ethernet-Protokoll die beiden untersten Protokollschichten, die Bitübertragungsschicht und die Sicherungsschicht fest. Für die Datenübertragung in den höheren Protokollschichten können beim Ethernet-Konzept dann Standard-Kommunikationsprotokolle wie das TCP/IP-Protokoll eingesetzt werden.

Das Ethernet-Protokoll unterteilt die zu übertragenden Daten in Datenpakete, sogenannte Frames, deren Aufbau im Standard IEEE 802.3 festgelegt ist. Dem eigentlichen Ethernet-Frame sind eine Präambel und ein Startbit, das sogenannte Start Frame Delimiter SFD, vorgeschaltet. Daran schließt sich dann das eigentliche Ethernet-Datenpaket an. Das Ethernet-Datenpaket setzt sich aus einem Kopfabschnitt, dem Header, einem Nutzdatenblock und einem Endabschnitt, dem Trailer, zusammen.

Der Header startet mit einem 6-Byte-Feld für die Zieladresse, an das sich ein weiteres 6-Byte-Feld mit der Quelladresse anschließt. Dann kann ein weiteres 4-Byte-Feld, das sogenannte VLAN-Tag mit zusätzlichen Steuerdaten im Header folgen, das insbesondere Priorisierungsinformationen enthält. Der Header schließt mit einem 2-Byte-Feld, dem sogenannte Type-Feld, ab, welche Auskunft gibt über das Protokoll, mit dem die Daten im Nutzdatenblock zu verarbeiten sind.

Der sich an den Header anschließende Nutzdatenblock kann eine Länge von 1500 Bytes aufweisen, wobei in verschiedenen Ethernet-Protokoll-Erweiterungen auch größere Datenblöcke erlaubt sein können. Der Nutzdatenblock wird dabei von einem in der Länge variablen Feld, dem sogenannten PAD-Feld abgeschlossen, das die festlegte Mindestlänge des Ethernet-Frames garantiert.

An den Nutzdatenblock schließt der Trailer an, der ein 4-Byte-Feld mit einer Prüfsumme aufweist. Wenn ein Ethernet-Frame erstellt wird, wird eine CRC-Berechnung über die Bitfolge durchgeführt und die Prüfsumme an den Datenblock angehängt. Der Empfänger führt nach dem Empfang die gleiche Berechnung aus. Stimmt die empfangene Prüfsumme nicht mit der selbst berechneten Prüfsumme überein, geht der Empfänger von einer fehlerhaften Übertragung aus. Der Ethernet-Frame wird dann verworfen.

Der Einsatz des Ethernet-Standards in der Industrieautomation ermöglicht es, Echtzeitlösungen bereitzustellen. Echtzeitfähige Feldbussysteme, die auf dem Ethernet-Standard basieren, sind beispielsweise PROFINET, EtherCAT, Powerlink oder SERCOS III. Das jeweils eingesetzte Feldbusprotokoll wird dabei Type-Feld im Header des Ethernet-Frames angezeigt.

Neben dem Ethernet-Standard können in Automatisierungssystemen jedoch auch andere Feldbus-Protokolle wie beispielsweise das CANopen, Interbus oder Profibus eingesetzt werden.

Feldbussysteme werden oft als Master-Slave-Systeme betrieben. Der Master-Teilnehmer im Feldbussystem ist die Steuerung, die die Buszugriffsberechtigung besitzt und Daten auf den Feldbus ausgeben kann. Die Slave-Teilnehmer im Feldbussystem sind die Feldgeräte, wie beispielsweise E/A-Geräte, Ventile, Antriebe, Sensoren, Messumformer etc. Sie besitzen keine Buszugriffsberechtigung und dürfen empfangene Daten nur quittieren und auf Anforderungen durch den Master-Teilnehmer Daten übermitteln.

Bei Master-Slave-Systemen erfolgt die Steuerung über ein Feldbussystem dann in der Regel so, dass der Master-Teilnehmer zyklisch Steuerungsprozesse durchführt, um auf der Grundlage von Eingangsdaten von Slave-Teilnehmern Ausgangsdaten für diese und/oder andere Slave-Teilnehmer zu erzeugen.

Der Master-Teilnehmer verschickt nach Abschluss eines Steuerprozesszyklus die Ausgangsdaten in Form von Nachrichten auf dem Feldbus, wobei die Slave-Teilnehmer die dem jeweiligen Slave-Teilnehmer zugeordneten Ausgangsdaten aus den Nachrichten entnehmen und mit diesen Ausgangsdaten einen lokalen Teilnehmerprozess ausführen. Die von dem lokalen Teilnehmerprozess ermittelten Daten werden dann wiederum vom Slave-Teilnehmer an den Master-Teilnehmer übertragen und anschließend als Eingangsdaten für den nächsten Steuerprozesszyklus vom Master-Teilnehmer genutzt.

Zur direkten Anbindung von Sensoren und Aktoren in einem Automatisierungssystem können zusätzlich zu dem Feldbussystem vereinfachte Kommunikationsprotokolle für den Datenaustausch genutzt werden. Ein solches Feldbussystem mit vereinfachtem Kommunikationsprotokoll ist das I/O-Link-System, das aus einem I/O-Link-Master-Teilnehmer und einem oder mehreren I/O-Link-Slave-Teilnehmern, den Sensoren und Aktoren besteht. Der I/O-Link-Master-Teilnehmer stellt die Schnittstelle zur überlagerten Steuerung zur Verfügung und steuert die Kommunikation mit den angeschlossenen I/O-Link-Feldgeräten.

Eine zentrale Anforderung an Automatisierungssysteme ist die sichere und zuverlässige Datenübertragung. Zum Steuern und Überwachen von technischen Prozessen im Rahmen der Industrieautomation muss sichergestellt sein, dass Fehler im Automatisierungssystem zuverlässig erkannt werden. Im Automatisierungssystem sind deshalb oft zusätzlich Sicherungsmaßnahmen, sogenannte Safety-Maßnahmen implementiert, die gewährleisten, dass Fehler mit hoher Wahrscheinlichkeit aufgedeckt werden, um so die Gefahr unerkannter Fehler zu minimieren.

In den Normen EN ISO 13849-1 und IEC/EN 62061 sind die zur Risikoreduzierung in Automatisierungssystemen vorgesehenen Safety-Maßnahmen beschrieben. Die für die einzelnen Teilnehmer erforderlichen Safety-Maßnahmen hängen dabei von den, dem jeweiligen Teilnehmer zugeordneten Sicherheitsfunktionen ab. Eine wesentliche Safety-Maßnahme ist dabei die redundante Auslegung des Teilnehmers in Form einer zweikanaligen Hardware. Alternativ kann auch eine einkanalige Hardware verwendet werden, wenn die Software dann zweikanalig aufgebaut ist.

Für die Übertragung von sicherheitsrelevanten Nachrichten zwischen sicherheitsrelevanten Teilnehmern am Feldbus ist weiterhin ein sicherheitszertifiziertes Kommunikationsprotokoll erforderlich.

Automatisierungssysteme werden oft im Mischbetrieb mit sicherheitsrelevanten Teilnehmern und nicht-sicherheitsrelevanten Teilnehmern verwendet, wobei sich dann zwischen den sicherheitsrelevanten Teilnehmern am Feldbus beliebig viele unsichere Feldbusgeräte befinden. Die sicherheitszertifizierten Kommunikationsprotokolle sind in der Regel so ausgelegt, dass sicherheitsrelevante Nachrichten auch über einen Kommunikationskanal mit ungesicherten Eigenschaften, einen sogenannten Black Channel übertragen werden können. Zwischen den sicherheitsrelevanten Teilnehmern und dem "nichtsicheren" Feldbus ist dann das Sicherheitsprotokoll integriert, das dem Sicherheitsniveau des sicherheitsgerichteten Automatisierungssystems entspricht und Übertragungsfehler auf dem Feldbus erkennt und beherrscht.

Für die verschiedenen Feldbus-Protokolle wurden Safety-Varianten zum Übertragen von sicherheitsrelevanten Nachrichten entwickelt. So gibt es für das Ethernet-basierte Feldbusprotokoll EtherCAT die Safety-Variante Safety over EtherCAT, abgekürzt FSoE. Der Sicherheitsableger für PROFINET ist PROFIsafe. Auch für das vereinfachte Kommunikationsprotokoll I/O-Link gibt es mit I/O-Link-Safety eine Sicherheitserweiterung.

Bei komplexen Fertigungsanlagen setzen sich die Automatisierungssysteme aus unterschiedlichen, auch heterogenen Netzwerken zusammen, bei denen in den einzelnen Netzwerkbereichen abhängig vom Hersteller unterschiedliche Kommunikationsprotokolle verwendet werden. Um eine Kommunikation zwischen den Teilnehmern über Netzwerkgrenzen hinaus zu ermöglichen, werden zwischen den einzelnen Netzwerken Protokollumsetzer, im Weiteren auch als Gateways bezeichnet, eingesetzt, die die Verbindung zwischen den Netzwerken herstellen.

Das Gateway ist dann jeweils Teilnehmer in den zu verbindenden Netzwerken und wickelt den netzwerkübergreifendenden Datenverkehr ab. Dabei bearbeitet das Gateway die weitergeleiteten Nachrichten, indem es eine Protokollumsetzung zwischen den Netzwerken vornimmt. Das Gateway kann je nach Erfordernis Protokolldaten hinzufügen oder wegnehmen.

Wenn Gateways im Rahmen einer Übertragung von sicherheitsrelevanten Nachrichten eingesetzt werden, müssen die Gateways die entsprechenden sicherheitstechnischen Anforderungen erfüllen. Um Sicherheits-Gateways kostengünstig zu realisieren, wird die erforderliche zweikanalige Hardware- beziehungsweise Softwareauslegung auf den KernBereich reduziert.

Das Gateway weist dann eine Schnittstellen-Einrichtung auf, die einen Nachrichtenaustausch mit dem ersten Netzwerk und mit einem zweiten Netzwerk ermöglicht. Mit der Schnittstellen-Einrichtung ist dann eine einkanalige Filter-Modul-Einrichtung verbunden, das aus den von der Schnittstellen-Einrichtung empfangenen Nachrichten Nachrichten mit einem ersten Sicherheitskommunikationsprotokoll und Nachrichten mit einem zweiten Sicherheitskommunikationsprotokoll ermittelt.

Ein mit der Filter-Modul-Einrichtung verbundenes wenigstens zweikanaliges Sicherheits-Modul im Gateway setzt die von der Filter-Modul-Einrichtung ermittelten Nachrichten mit dem ersten Sicherheitskommunikationsprotokoll in Nachrichten mit dem zweiten Sicherheitskommunikationsprotokoll beziehungsweise Nachrichten mit dem zweiten Sicherheitskommunikationsprotokoll in Nachrichten mit dem ersten Sicherheitskommunikationsprotokoll um.

Mit dieser Auslegung kann im Gateway ein netzwerkübergreifender Datenverkehr auch von sicherheitsrelevanten Nachrichten im Wesentlichen einkanalig realisiert werden. Nur die sicherheitsrelevanten Routinen bei der Protokollumsetzung sind zweikanalig ausgeführt. Das zweikanalige Sicherheits-Modul kann durch wenigstens zwei parallele Software-Funktionskanäle realisiert werden. Durch das Gateway kann dann ein kostengünstiger Mikrocontroller, der vergleichsweise wenig Speicher benötigt, die sicherheitsrelevante Protokollumsetzung zweikanalig durchführen.

Die einkanalige Schnittstellen-Einrichtung kann dabei eine einkanalige erste Schnittstelle, die einen Nachrichtenaustausch mit dem ersten Netzwerk ermöglicht, das den wenigstens einen ersten Teilnehmer mit der ersten Sicherheitskommunikationsschicht aufweist, die das erste Sicherheitskommunikationsprotokoll verarbeitet, und eine einkanalige zweite Schnittstelle, die einen Nachrichtenaustausch mit dem zweiten Netzwerk ermöglicht, das den wenigstens zweiten Teilnehmer mit der zweiten Sicherheitskommunikationsschicht aufweist, die das zweite Sicherheitskommunikationsprotokoll verarbeiten, aufweisen.

Ferner kann die Filter-Modul-Einrichtung ein einkanaliges erstes Filter-Modul, um aus von der ersten Schnittstelle empfangenen Nachrichten Nachrichten mit dem ersten Sicherheitskommunikationsprotokoll zu ermitteln, und ein einkanaliges zweites Filter-Modul, um aus von der zweiten Schnittstelle empfangenen Nachrichten Nachrichten mit dem zweiten Sicherheitskommunikationsprotokoll zu ermitteln, aufweisen.

Das wenigstens zweikanalige Sicherheits-Modul ist dann mit dem ersten und dem zweiten Filter-Modul verbunden, um vom ersten Filter-Modul ermittelte Nachrichten mit dem ersten Sicherheitskommunikationsprotokoll in Nachrichten mit dem zweiten Sicherheitskommunikationsprotokoll beziehungsweise um vom zweiten Filter-Modul ermittelte Nachrichten mit dem zweiten Sicherheitskommunikationsprotokoll in Nachrichten mit dem ersten Sicherheitskommunikationsprotokoll umzusetzen. Ein einkanaliges Betriebsfunktions-Modul ist weiter mit dem ersten und dem zweiten Filter-Modul und dem Sicherheits-Modul verbunden, um das erste Filter-Modul, das zweite Filter-Modul und das Sicherheits-Modul zyklisch aufzurufen.

Diese Auslegung ermöglicht eine integrierte Protokollumsetzung, bei der sowohl eine Protokollumwandlung von nicht-sicherheitsrelevanten Nachrichten als auch von sicherheitsrelevanten Nachrichten in einem einzelnen Protokollumsetzer realisierbar ist.

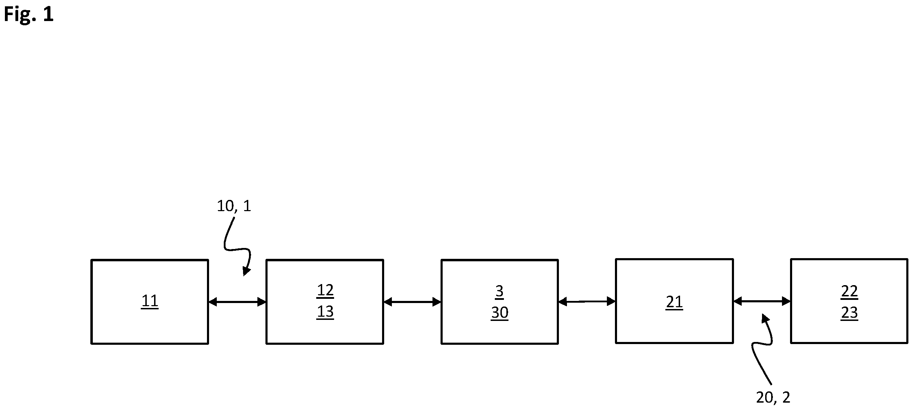

Fig. 1 zeigt schematisch die Grundstruktur eines Automatisierungssystems mit einem ersten Netzwerk 10 und einem zweiten Netzwerk 20, die über ein Gateway, im Weiteren auch als Protokollumsetzer 30 bezeichnet, miteinander verbunden sind, das eine integrierte Protokollumsetzung ausführt. Jedes Netzwerk weist wenigstens einen Master-Teilnehmer, der die Steuerungsebene bildet, und wenigstens einen Slave-Teilnehmer, der die Sensor-/Aktorebene repräsentiert, auf.

In jedem Netzwerk sind der Master-Teilnehmer und der Slave-Teilnehmer über einen seriellen Bus miteinander verbunden, über den der Nachrichtenaustausch zwischen dem Master-Teilnehmer und dem Slave-Teilnehmer stattfindet. Der serielle Bus des ersten Netzwerkes 10 ist mit dem seriellen Bus des zweiten Netzwerkes 20 über das Gateway gekoppelt.

Die Datenübertragung im ersten Netzwerk 10 beziehungsweise im zweiten Netzwerk 20 werden jeweils vom Master-Teilnehmer in Form von Datenpaketen organisiert, wobei im ersten Netzwerk 10 beispielweise das Ethernet-Feldbusprotokoll EtherCAT und im zweiten Netzwerk 20 beispielsweise das Ethernet-Feldbusprotokoll PROFINET eingesetzt wird. Das erste Netzwerk 10 wird deshalb im Weiteren als EtherCAT-Netzwerk 1 und das zweite Netzwerk 20 im Weiteren als PROFINET-Netzwerk 2 bezeichnet. Der Master-Teilnehmer im EtherCAT-Netzwerk 1 ist dann ein EtherCAT-Master 11 und der Master-Teilnehmer im zweiten PPROFINET-Netzwerk ein PPROFINET-Master 21.

Das Gateway, das den Datenaustausch zwischen dem EtherCAT-Netzwerk 1 und dem PPROFINET-Netzwerk 2 ausführt, ist ein EtherCAT/PPROFINET-Gateway 3, das eine Protokollumsetzung vom Feldbusprotokoll EtherCAT zum Feldbusprotokoll PROFINET und umgekehrt ausführt.

Die beiden im ersten und zweiten Netzwerk 10, 20 eingesetzten Feldbusprotokolle EtherCAT und PROFINET sind nur beispielhaft. Alternativ besteht auch die Möglichkeit, ein anderes Feldbusprotokoll auf der Grundlage des Ethernet-Standards, aber auch ein nicht-Ethernet-basiertes Feldbusprotokoll, einzusetzen.

Bei dem in Fig. 1 gezeigten Automatisierungssystem sind sowohl der Slave-Teilnehmer im EtherCAT-Netzwerk und als auch der Slave-Teilnehmer im PPROFINET-Netzwerk sicherheitsrelevant. Der Slave-Teilnehmer im EtherCAT-Netzwerk 1, welcher auch als der erste Teilnehmer 13 bezeichnet wird, arbeitet mit der Safety-Variante Safety over EtherCAT, abgekürzt FSoE, von EtherCAT und ist ein FSoE-Safety-Teilnehmer 12. Der EtherCAT-Master 11 des EtherCAT-Netzwerk 1 steuert die Nachrichtübertragung, führt aber in der Regel keine eigenständige Prozessdatenverarbeitung aus, weshalb im EtherCAT-Master 11 dann auch das Sicherheits-Kommunikationsprotokoll FSoE nicht implementiert sein muss.

Der Slave-Teilnehmer im PROFINET-Netzwerk 1, welcher auch als der zweite Teilnehmer 23 bezeichnet wird, arbeitet mit der Sicherheitsvariante von PROFINET namens PROFIsafe und ist ein PROFlsafe-Safety-Teilnehmer 22. Der PROFINET-Master 21 des PROFINET-Netzwerks 2 setzt dann auch das Sicherheits-Kommunikationsprotokoll PROFlsafe ein.

Ferner ist auf dem EtherCAT/PPROFINET-Gateway 3 für eine Protokollumsetzung zwischen dem EtherCAT-Netzwerk 1 und dem PROFINET-Netzwerk 2 sowohl das Sicherheitskommunikationsprotokoll FSoE als auch das Sicherheitskommunikationsprotokoll PROFIsafe installiert. Das EtherCAT/PPROFINET-Gateway 3 stellt deshalb ein Sicherheits-Gateway dar.

Statt einem einzelnen sicherheitsrelevanten Slave-Teilnehmer, wie in Fig. 1 gezeigt, kann auch eine beliebige Anzahl von sicherheitsrelevanten Slave-Teilnehmern am jeweiligen Feldbus vorgesehen sein. Ferner sind in den einzelnen Netzwerken neben sicherheitsrelevanten Teilnehmern auch nicht-sicherheitsrelevante Teilnehmer eingebunden Die Steuerungsebene in den Netzwerken kann auch, je nachdem, welches Feldbusprotokoll eingesetzt wird, auf mehrere Master-Teilnehmer aufgeteilt sein.

Der Nachrichtenaustausch zwischen dem EtherCAT-Netzwerk 1 und dem PROFINET-Netzwerk 2 bei dem in Fig. 1 gezeigten Automatisierungssystem erfolgt in folgender Weise:
Der FSoE-Safety-Teilnehmer 12 generiert eine FSoE-Nachricht, die vom EtherCAT-Master 11 abgeholt und an das EtherCAT/PPROFINET-Gateway 3 übertragen wird. Im EtherCAT/PPROFINET-Gateway 3 wird die FSoE-Nachricht in eine PROFIsafe-Nachricht umgewandelt. Das EtherCAT/PROFINET-Gateway 3 übergibt die PROFIsafe-Nachricht weiter an den PROFINET-Master 21, der die PROFlsafe-Nachricht an den PROFIsafe-Safety-Teilnehmer 22 sendet, von dem die PROFlsafe-Nachricht interpretiert wird.

In der umgekehrten Richtung sendet der PROFIsafe-Safety-Teilnehmer 22 eine PROFIsafe-Nachricht an den PROFINET-Master 21, der die PROFIsafe-Nachricht an das EtherCAT/PROFIsafe-Gateway 3 übergibt. Das EtherCAT/PPROFINET-Gateway 3 wandelt die PROFIsafe-Nachricht in eine FSoE-Nachricht um. Die FSoE-Nachricht wird dann vom EtherCAT-Master 11 abgeholt und an den FSoE-Safety-Teilnehmer 21 übertragen, von dem die FSoE-Nachricht interpretiert wird.

Die sicherheitsrelevanten Teilnehmer in den beiden Netzwerken, bei der in Fig. 1 gezeigten Darstellung sowohl der PROFINET-Master 21 als auch die Slave-Teilnehmer FSoE-Safety-Teilnehmer 12 und PROFIsafe-Safety-Teilnehmer 22 weisen eine Sicherheitskommunikationsschicht zum Verarbeiten von Sicherheitsdaten auf. Die Sicherheitskommunikationsschicht ist entsprechend den Sicherheitsanforderungen in der Regel zweikanalig in Form von Hardware und/oder Software ausgelegt.

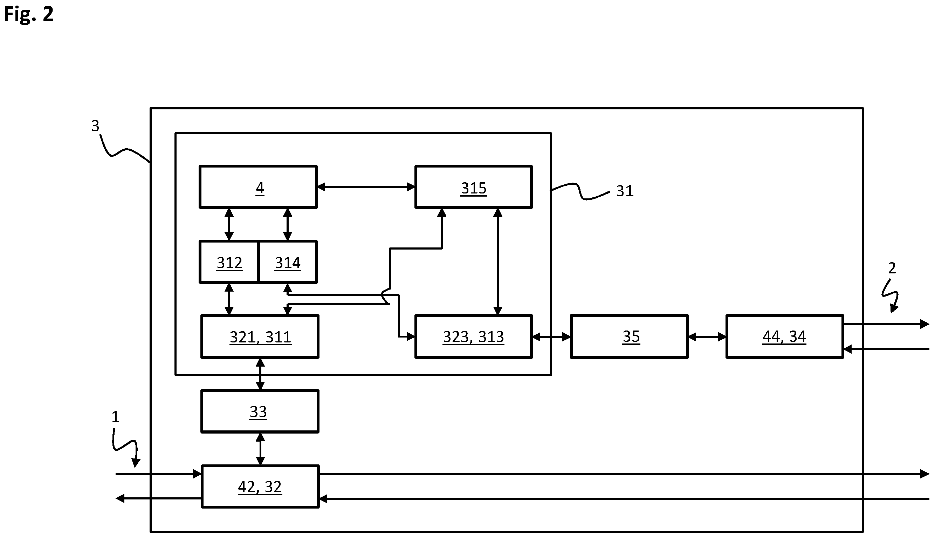

Fig. 2 zeigt im Detail den Aufbau des EtherCAT/PROFINET-Gateway 3, das als Sicherheits-Gateway arbeitet. Das EtherCAT/PROFINET-Gateway 3 weist dabei als zentrale Einheit einen Mikrocontroller 31 auf.

Zum Anschluss an das EtherCAT-Netzwerk 1 ist ein EtherCAT-Slave-Controller 32 als eine einkanalige erste Schnittstelle 42 vorgesehen, das einen Datenaustausch mit den Nachrichten auf dem EtherCAT-Feldbus 1 ermöglicht. Der EtherCAT-Slave-Controller 32 ist mit einem EtherCAT-Speicher 33 verbunden, der die Schnittstelle zwischen dem EtherCAT-Slave-Controller 32 und dem Mikrocontroller 31 bildet und in dem die zwischen dem EtherCAT-Slave-Controller 32 und dem EtherCAT-Feldbus 1 ausgetauschten Nachrichten abgelegt werden.

Zum Anschluss an den PROFINET-Feldbus 2 ist ein PROFINET-Slave-Controller 34 als eine einkanalige zweite Schnittstelle 44 vorgesehen, das einen Datenaustausch mit den Nachrichten auf dem PROFINET-Feldbus 2 durchführt. Der PROFINET-Slave-Controller 34 ist mit einem PROFINET-Speicher 35 verbunden, der die Schnittstelle zwischen dem PROFINET-Slave-Controller 34 und dem Mikrocontroller 31 bildet. Die zwischen dem PROFINET-Slave-Controller 34 und dem PROFINET-Feldbus ausgetauschten Nachrichten werden im PROFINET-Speicher 35 abgelegt.

Auf dem Mikrocontroller 31 ist ein Software-Modul EtherCAT-Slave-Funktionen 311 vorgesehen, das mit dem EtherCAT-Speicher 33 verbunden ist und unter anderem als ein einkanaliges erstes Filter-Modul 321 arbeitet, um aus dem EtherCAT-Speicher 33 abgelegten Nachrichten FSoE-Nachrichten zu ermitteln. Das Software-Modul EtherCAT-Slave-Funktionen 311 ist weiter mit einem FSoE-Speicher 312 verbunden, in dem die FSoE-Nachrichten abgelegt werden. Der FSoE-Speicher 312 hat wiederum eine Schnittstelle zu einem Software-Modul Safety-Funktionen 4, welches ein zweikanaliges Sicherheits-Modul bildet.

Auf dem Mikrocontroller 31 ist ferner ein Software-Modul PROFINET-Slave-Funktionen 313 vorgesehen, das mit dem PROFINET-Speicher 35 verbunden ist und unter anderem als ein einkanaliges zweites Filter-Modul 323 arbeitet, um aus den PROFINET-Speicher 35 abgelegten Nachrichten PROFIsafe-Nachrichten zu ermitteln. Das Software-Modul PROFINET-Slave-Funktionen 313 ist weiter mit einem PROFIsafe-Speicher 314 verbunden, in dem die PROFlsafe-Nachrichten abgelegt werden. Der PROFIsafe-Speicher 314 hat außerdem eine Schnittstelle zum zweikanaligen Software-Modul Safety-Funktionen 4.

Bis zum Software-Modul Safety-Funktionen 4 liegt im EtherCAT/PROFINET-Gateway 3 ein Black Channel vor. Das Safety-Modul Safety-Funktionen 4 kann dann Veränderungen an den FSoE-Nachrichten beziehungsweise den PROFlsafe-Nachrichten erkennen. Das Software-Modul Safety-Funktionen 4 ist weiter ausgelegt, FSoE-Nachrichten in PROFIsafe-Nachrichten und PROFIsafe-Nachrichten in FSoE-Nachrichten umzuwandeln.

Auf dem Mikrocontroller 31 ist ferner ein mit dem Software-Modul EtherCAT-Slave-Funktionen 311, dem Software-Modul PROFINET-Slave-Funktionen 313 und dem Software-Modul Safety-Funktionen 4 verbundenes einkanaliges Betriebsfunktions-Modul 315 vorgesehen, um das Software-Modul EtherCAT-Slave-Funktionen 311, das Software-Modul PROFINET-Slave-Funktionen 313 und das Software-Modul Safety-Funktionen 4 zyklisch aufzurufen.

Das EtherCAT/PROFINET-Gateway 3 arbeitet bei der Umwandlung einer FSoE-Nachricht in eine PROFlsafe-Nachricht wie folgt:
Die in einem EtherCAT-Datenpaket enthaltene FSoE-Nachricht wird über das EtherCAT-Netzwerk 1 von dem EtherCAT-Slave-Controller 32 empfangen und in den EtherCAT Speicher 33 geschrieben. Vom EtherCAT Speicher 33 wird die FSoE-Nachricht von dem einkanaligen Software-Modul EtherCAT-Slave-Funktionen 311 zu dem FSoE-Speicher 312 übertragen.

Der Black Channel im EtherCAT/PROFINET-Gateway 3 reicht bis zum FSoE-Speicher 312. Das zweikanalige Safety-Modul Safety-Funktionen 4 kann Veränderungen an der FSoE-Nachricht, die im FSoE-Speicher 312 abgelegt ist, erkennen. Das zweikanalige Software-Modul Safety-Funktionen 4 wandelt die FSoE-Nachricht in die PROFIsafe-Nachricht um und legt diese im PROFIsafe-Speicher 314 ab.

Das einkanalige Software-Modul PROFINET-Slave-Funktionen 313 kopiert die PROFIsafe-Nachricht von dem PROFIsafe-Speicher 313 in den PROFINET-Speicher 35. Wenn ein entsprechendes PROFINET-Datenpaket vom PROFINET-Slave-Controller 34 empfangen wird, um den PROFINET-Speicher 35 zu lesen, wird die PROFlsafe-Nachricht in das PROFINET-Datenpaket vom PROFINET-Slave-Controller 34 eingefügt.

Das EtherCAT/PROFINET-Gateway 3 arbeitet bei der Umwandlung einer PROFlsafe-Nachricht in eine FSoE-Nachricht wie folgt:
Die in einem PROFINET-Datenpaket enthaltene PROFIsafe-Nachricht wird vom PROFINET-Slave-Controller 34 empfangen und in den PROFINET-Speicher 35 geschrieben. Vom PROFINET-Speicher 35 wird die PROFlsafe-Nachricht von dem einkanaligen Software-Modul PROFINET-Slave-Funktionen 313 zu dem PROFIsafe-Speicher 314 übertragen.

Der Black Channel des EtherCAT/PROFINET-Gateways 3 umfasst noch den PROFIsafe-Speicher 314. Das zweikanalige Safety-Modul Safety-Funktionen 4 kann dann Veränderungen an der PROFIsafe-Nachricht, die im PROFIsafe-Speicher 314 abgelegt ist, erkennen. Das zweikanalige Software-Modul Safety-Funktionen 4 wandelt die PROFIsafe-Nachricht in die FSoE-Nachricht um und legt die FSoE-Nachricht im FSoE-Speicher 312 ab.

Das einkanalige Software-Modul EtherCAT-Slave-Funktionen 311 kopiert die FSoE-Nachricht von dem FSoE-Speicher 312 in den EtherCAT-Speicher 33. Wenn ein entsprechendes EtherCAT-Datenpaket vom EtherCAT-Controller 32 empfangen wird, um den EtherCAT-Speicher 33 zu lesen, wird die FSoE-Nachricht vom EtherCAT-Controller 32 in das EtherCAT-Datenpaket eingefügt.

Ein Software-Modul Betriebsfunktions-Modul 315 sorgt dafür, dass das zweikanalige Software-Modul Safety-Funktionen 4 sowie das einkanalige Software-Modul EtherCAT-Slave-Funktionen 311 und das einkanalige Software-Modul PROFINET-Slave-Funktionen 313 zur Ausführung der vorstehend erläuterten Vorgänge zyklisch aufgerufen werden.

Das in Fig. 2 gezeigte EtherCAT/PROFINET-Gateway 3 ist so ausgelegt, dass sowohl eine Protokollumwandlung von EtherCAT-Nachrichten und PPROFINET-Nachrichten als auch von PROFIsafe-Nachrichten und FSoE-Nachrichten realisiert wird. Neben der erfindungsgemäßen integrierten Protokollumsetzung, besteht auch die Möglichkeit, statt einer integrierten Protokollumsetzung eine getrennte Protokollumsetzung der sicherheitsrelevanten Nachrichten und der nicht-sicherheitsrelevante Nachrichten vorzusehen. Die beiden Funktionen können dann statt in einem Gateway zusammen, auch getrennt in eigenständigen Gateways ausgeführt werden.

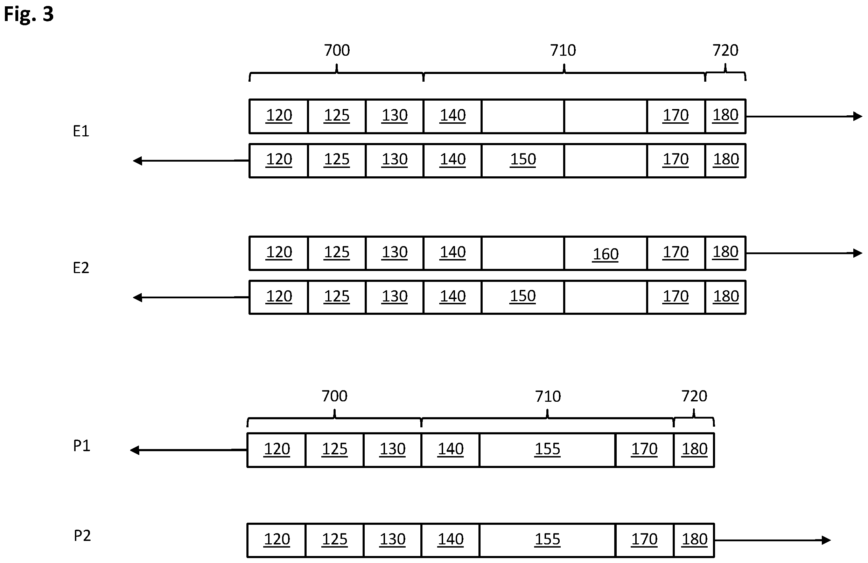

Das Sicherheits-Gateway, das in Fig. 3 als kombinierter EtherCAT-Slave-Teilnehmer und PROFINET-Slave-Teilnehmer ausgebildet ist, kann dann auch nur ein EtherCAT-Slave-Teilnehmer oder ein PROFINET-Slave-Teilnehmer sein. Dann ist auch nur das Software Modul EtherCAT Slave Funktionen und der EtherCAT Slave Controller zum Anschluss an das EtherCAT-Netzwerk beziehungsweise das Software Modul PROFINET-Funktionen und der PROFINET-Slave-Controller zum Anschluss an das PROFINET-Netzwerk vorgesehen. Das Software-Modul Safety-Funktionen ist weiter so ausgelegt, FSoE-Nachrichten in PROFIsafe-Nachrichten und PROFIsafe-Nachrichten in FSoE-Nachrichten umzuwandeln.

Die Umsetzung vom EtherCAT-Datenpaket in das PROFINET-Datenpaket, dann wenn das Sicherheits-Gateway nur als EtherCAT-Slave-Teilnehmer ausgebildet ist, erfolgt in einem nachgeordneten EtherCAT/PROFINET-Gateway. Ein solches nachgeordneten EtherCAT/PROFINET-Gateway führt auch die Umsetzung vom PROFINET-Datenpaket in das EtherCAT-Datenpaket durch, wenn das Sicherheits-Gateway ausschließlich als PROFINET-Slave-Teilnehmer ausgebildet ist.

Das Sicherheits-Gateway kann grundsätzlich als ein Teilnehmer eines frei wählbaren Kommunikationssystems ausgestaltet sein, da sowohl das FSoE-Protokoll als auch das PROFIsafe-Protokoll auf einem beliebigen Kommunikationsweg übertragen kann. Dann muss das Software-Modul EtherCAT-Slave-Funktionen 311 beziehungsweise das Software-Modul PROFINET-Slave-Funktionen 313 durch ein entsprechendes Software Modul, der EtherCAT-Slave-Controller 32 beziehungsweise der PROFINET-Slave-Controller 34 durch einen entsprechenden Controller, eine serielle Schnittstelle oder einen Dual-Port-RAM-Speicher und das EtherCAT-Netzwerk 1 beziehungsweise das PROFINET-Netzwerk 2 durch ein entsprechendes Netzwerk bzw. einen entsprechenden Feldbus, eine Punkt-zu-Punkt-Verbindung oder einen Datenbus ersetzt werden.

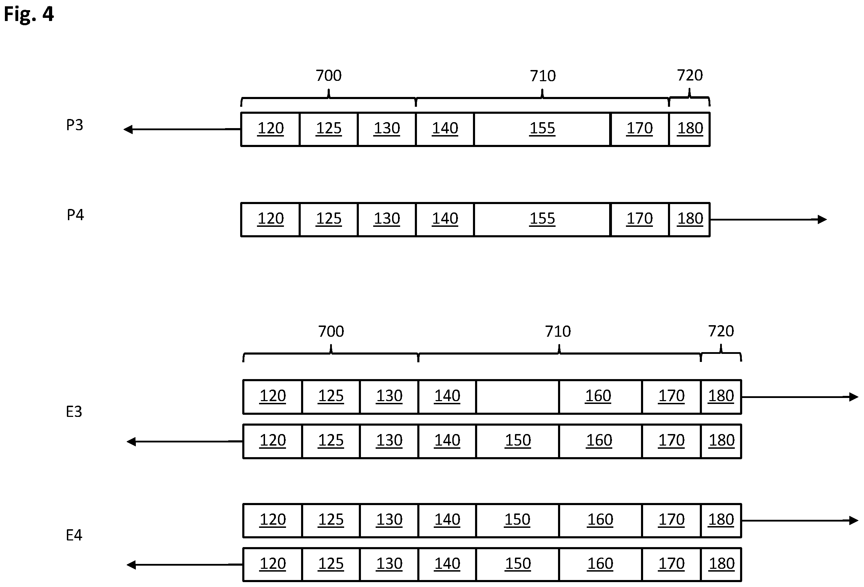

In Fig. 3 und Fig. 4 ist eine Datenübertragung zwischen dem FSoE-Safety-Teilnehmer 12 und dem PROFIsafe-Safety-Teilnehmer 22 im in Fig. 1 dargestellten Automatisierungsnetzwerk gezeigt, wobei in Fig. 3 eine Übertragung von FSoE-Daten vom FSoE-Safety-Teilnehmer 12 zum PROFIsafe-Safety-Teilnehmer 22 und in Fig. 4 eine Übertragung von PROFIsafe-Daten vom PROFIsafe-Safety-Teilnehmer 22 zum FSoE-Safety-Teilnehmer 12 stattfindet.

Die Datenübertragung erfolgt mit Hilfe von Ethernet-Datenpaketen, die sich, wie vorstehend erläutert, aus einem Header 700, einem Nutzdatenblock 710 und einem Trailer 720 mit der Datenpaket-Prüfsumme CRC zusammensetzen.

Im Header 700 der Ethernet-Datenpakete ist in einem Zieladressfeld 120 die Zieladresse DA, in einem Quelladressfeld 125 die Quelladresse SA und in einem Type-Feld 130 der EtherType enthalten. Im Type-Feld 130 ist dabei das Ethernet-Feldbus-Protokoll angegeben, mit dem die Daten im Nutzdatenblock zu verarbeiten sind. Beispielsweise hat das EtherCAT-Protokoll den Wert 0x88A4 und das PROFINET-Protokoll den Wert 0x8892.

Da beim EtherCAT-Protokoll die Ethernet-Datenpakete vom Master-Teilnehmer gesendet und nach der Verarbeitung von den Slave-Teilnehmern im Durchlauf auch wieder empfangen werden, ist im Header sowohl für die Zieladresse DA, also im Zieladressfeld 120 und die Quelladresse SA, also im Quelladressfeld 125 kein für die Adressierung verwendeter Wert eingetragen. Beim PROFINET-Protokoll dagegen sind die Ethernet-Datenpakete, die zwischen dem Master-Teilnehmer und den Slave-Teilnehmern ausgetauscht werden, adressiert, weshalb im Header 700 jeweils ein Wert im Zieladressfeld 120 für die Zieladresse DA und im Quelladressfeld 130 für die Quelladresse SA eingetragen ist.

Der Nutzdatenblock 710 der Ethernet-Datenpakete weist dann ein eigenes Protokoll-Header-Feld 140 mit Steuerdaten des jeweils verwendeten Feldbus-Protokolls, also entweder EtherCAT oder PROFINET auf. Daran schließt sich dann das eigentliche Nutzdaten-Bereich an.

Da beim EtherCAT-Protokoll die Ethernet-Datenpakete von den Slave-Teilnehmern im Durchlauf verarbeitet werden, ist jedem Slave-Teilnehmer am Feldbus im Nutzdaten-Bereich ein eigener Datenblock-Bereich, der Teil eines Datagramms ist. Dieser Datenblock-Bereich wird im Folgenden auch als Datagrammfeld bezeichnet. Beispielhaft sind in Fig. 3 und 4 ein erstes Datagrammfeld 150 und ein zweites Datagrammfeld 160 dargestellt. Beim PROFINET-Protokoll dagegen sind Daten im Nutzdaten-Bereich für den jeweils in der Zieladresse genannten Feldbus-Teilnehmer bestimmt. Somit ist beispielhaft in Fig. 3 und 4 jeweils nur ein Nutzdatenfeld 155 dargestellt.

Der Nutzdatenblock wird von einem Trailer-Bereich End-Feld 170 des jeweils verwendeten Feldbus-Protokolls, also entweder EtherCAT-End oder PROFINET-End abgeschlossen.

Im Trailer 720 ist in einem Trailer-Feld 180 dann die jeweilige Datenpaket-Prüfsumme CRC enthalten.

Wie Fig. 3 zeigt, sendet der EtherCAT-Master 11 ein erstes EtherCAT-Datenpaket E1 mit zwei leeren Datagrammen im Nutzdatenbereich an die beiden EtherCAT-Slave-Teilnehmer FSoE-Safety-Teilnehmer 12 und EtherCAT/PROFINET-Gateway 3. Aus Gründen der Übersichtlichkeit, wird bei einem leeren Datagramm das entsprechende erste und/oder zweite Datagrammfeld 150, 160 auch nicht dargestellt. Der FSoE-Safety-Teilnehmer 12 trägt beim Durchlauf des ersten EtherCAT-Datenpaketes E1 erste Daten "FSoE-Message mit FSoE-Data" als Schreib-Daten in das zugeordnete erste Datagrammfeld 150 des ersten EtherCAT-Datenpaketes E1 ein. Da im EtherCAT/PROFINET-Gateway 3 noch keine Schreib-Daten vorliegen, bleibt das zugeordnete zweite Datagrammfeld 160 des ersten EtherCAT-Datenpaketes E1 leer.

Der EtherCAT-Master 11 empfängt das erste EtherCAT-Datenpaket E1 dann wieder und kopiert die ersten Daten "FSoE-Message mit FSoE-Data". Anschließend sendet der EtherCAT-Master 11 ein zweites EtherCAT-Datenpaket E2 mit den ersten Daten "FSoE-Message mit FSoE-Data" als Lese-Daten im zweiten Datagrammfeld 160 für den EtherCAT-Slave EtherCAT/PROFINET-Gateway 3.

Der EtherCAT-Slave-Controller 32 des EtherCAT/PROFINET-Gateways 3 liest beim Durchlauf des zweiten EtherCAT-Datenpaketes E2 die ersten Daten "FSoE-Message mit FSoE-Data" aus dem zugeordneten zweiten Datagrammfeld 160 im zweiten EtherCAT-Datenpaket E2 aus. Das dem EtherCAT/PROFINET-Gateway 3 zugeordnete zweite Datagrammfeld 160 des zweiten EtherCAT-Datenpaketes E2 wird dann nicht weiter beschrieben und bleibt leer, da im EtherCAT/PROFINET-Gateway 3 weiterhin keine Schreib-Daten vorliegen.

Der FSoE-Safety-Teilnehmer 12 dagegen trägt beim Durchlauf des zweiten EtherCAT-Datenpaketes E2 zweite Daten "FSoE-Message mit FSoE-Data" als Schreib-Daten in das zugeordnete erste Datagrammfeld 150 des zweiten EtherCAT-Datenpaketes E2 ein. Die zweiten Daten "FSoE-Message mit FSoE-Data" entsprechen dabei den ersten Daten "FSoE-Message mit FSoE-Data", solange der FSoE-Safety-Teilnehmer 12 noch keine Antwort erhalten hat und der FSoE-Safety-Teilnehmer 12 deshalb in Reaktion auf die Antwort noch keinen neuen Daten erzeugt hat. Der EtherCAT-Master 11 empfängt das zweite EtherCAT-Datenpaket E2 dann mit den zweiten Daten "FSoE-Message mit FSoE-Data".

Die Verarbeitung der ersten Daten "FSoE-Message mit FSoE-Data" im in Fig. 2 gezeigten EtherCAT/PROFINET Gateway 3 erfolgt in folgender Weise:
Im EtherCAT/PROFINET Gateway 3 kopiert das einkanalige Software-Modul EtherCAT-Slave Funktionen 311 die ersten Daten "FSoE-Message mit FSoE-Data" aus dem EtherCAT-Speicher 33 des EtherCAT-Slave-Controllers 32 in den FSoE-Speicher 312 des Mikrocontrollers 31. Vom FSoE-Speicher 312 liest das zweikanalige Software-Modul Safety-Funktionen 4 die ersten Daten "FSoE-Message mit FSoE-Data" aus, wandelt dann die Daten in erste Daten "PROFIsafe-Message mit FSoE-Data" um und speichert anschließend die ersten Daten "PROFIsafe-Message mit FSoE-Data" im PROFIsafe-Speicher 314 des Mikrocontrollers 31.

Das einkanalige Software-Modul PROFINET-Slave-Funktionen 313 liest die ersten Daten "PROFIsafe-Message mit FSoE-Data" aus dem PROFIsafe-Speicher 313 des Mikrocontrollers 31 aus und legt die ersten Daten "PROFIsafe-Message mit FSoE-Data" im PROFINET-Speicher 35 ab.

Wie Fig. 3 dann weiter zeigt, sendet der PROFINET-Slave-Controller 34 die im PROFINET-Speicher 35 abgelegten ersten Daten "PROFIsafe-Message mit FSoE-Data" in einem dem Nutzdatenfeld 155 eines ersten PROFINET-Datenpakets P1 an den PROFINET-Master 21. Im ersten PROFINET-Datenpaket P1 ist dabei im Header 700 im Zieladressfeld 120 als die Zieladresse DA der PROFINET-Master 21 und im Quelladressfeld 125 als die Quelladresse SA das EtherCAT/PROFINET Gateway 3 angegeben.

Der PROFINET-Master 21 empfängt das erste PROFINET-Datenpaket P1, kopiert die ersten Daten "PROFIsafe-Message mit FSoE-Data" und sendet ein zweites PROFINET-Datenpaket P2 an den PROFINET-Slave-Teilnehmer PROFlsafe-Safety-Teilnehmer 22. Im zweiten PROFINET-Datenpaket P2 ist dabei im Header 700 im Zieladressfeld 120 als die Zieladresse DA der PROFIsafe-Safety-Teilnehmer 22 und im Quelladressfeld 125 als die Quelladresse SA der PROFINET-Master 21 angegeben. Der PROFIsafe-Safety-Teilnehmer 22 liest dann nach Empfang des zweiten PROFINET-Datenpaketes P2 die ersten Daten "PROFIsafe-Message mit FSoE-Data" aus dem Nutzdatenfeld 155 aus.

In Fig. 4 werden dann in Reaktion auf die empfangenen FSoE-Data PROFI safe-Daten vom PROFIsafe-Safety-Teilnehmer 22 zum FSoE-Safety-Teilnehmer 12 übertragen. Der PROFINET-Slave-Teilnehmer PROFIsafe-Safety-Teilnehmer 22 sendet dazu ein drittes PROFINET-Datenpaket P3 mit den ersten Daten "PROFIsafe-Message mit PROFIsafe-Data" im Nutzdatenfeld 155 an den PROFINET-Master21. Im dritten PROFINET-Datenpaket P3 ist dabei im Header 700 im Zieladressfeld 120 als die Zieladresse DA der PROFINET-Master 21 und im Quelladressfeld 125 als die Quelladresse SA der PROFIsafe-Safety-Teilnehmer 22 angegeben.

Der PROFINET-Master 21 empfängt das dritte PROFINET-Datenpaket P3 und kopiert die Daten "PROFIsafe-Message mit PROFIsafe-Data" in das Nutzdatenfeld 155 eines vierten PROFINET-Datenpakets P4. Der PROFINET-Master 21 sendet das vierte PROFINET-Datenpaket P4 dann an das EtherCAT/PROFINET-Gateway 3. Im vierten PROFINET-Datenpaket P4 ist dabei im Header 700 im Zieladressfeld 120 als die Zieladresse DA das EtherCAT/PROFINET-Gateway 3 und im Quelladressfeld 125 als die Quelladresse SA der PROFINET-Master 21 angegeben.

Die Verarbeitung der ersten Daten "PROFIsafe-Message mit PROFIsafe-Data" im in Fig. 2 gezeigten EtherCAT/PROFINET Gateway 3 erfolgt in folgender Weise:
Der PROFINET-Slave-Controller 34 des EtherCAT/PROFINET-Gateways 3 legt die ersten Daten "PROFIsafe-Message mit PROFIsafe-Data" aus dem vierten PROFINET-Datenpaket P4 im PROFINET-Speicher 35 ab. Das einkanalige Software-Modul PROFINET-Slave-Funktionen 313 des EtherCAT/PROFINET-Gateways 3 überträgt dann die ersten Daten "PROFIsafe-Message mit PROFIsafe-Data" in den PROFIsafe-Speicher 314 des Mikrocontrollers 31.

Das zweikanalige Software-Modul Safety-Funktionen 4 liest die ersten Daten "PROFIsafe-Message mit PROFIsafe-Data" aus dem PROFIsafe-Speicher 314 aus, wandelt die ersten Daten "PROFIsafe-Message mit PROFIsafe-Data" in erste Daten "FSoE-Message mit PROFIsafe-Data" um und speichert anschließend die ersten Daten "FSoE-Message mit PROFIsafe-Data" im FSoE-Speicher 312 des Mikrocontrollers 31. Von dort liest das einkanalige Software-Modul EtherCAT-Slave Funktionen 311 die ersten Daten "FSoE-Message mit PROFIsafe-Data" aus und schreibt die ersten Daten "FSoE-Message mit PROFIsafe-Data" als Schreib-Daten in den EtherCAT-Speicher 33 des EtherCAT-Slave-Controllers 32.

Wie Fig. 4 weiter zeigt, sendet der EtherCAT-Master 11 ein drittes EtherCAT-Datenpaket E3 an die EtherCAT-Slave-Teilnehmer FSoE-Safety-Teilnehmer 12 und EtherCAT/PROFINET-Gateway 3. Das dem FSoE-Safety-Teilnehmer 12 zugeordnete Datagramm ist dabei leer, da im EtherCAT-Master 11 keine Daten für den FSoE-Safety-Teilnehmer 12 vorliegen. In das Datagramm für das EtherCAT/PROFINET-Gateway 3 hat der EtherCAT-Master 11 dagegen im zweiten Datagrammfeld 160 die zweiten Daten "FSoE-Message mit FSoE-Data" aus dem zweiten EtherCAT-Datenpaket E2 als Lese-Daten eingetragen. Die zweiten Daten "FSoE-Message mit FSoE-Data" entsprechen dabei den ersten Daten "FSoE-Message mit FSoE-Data", solange der FSoE-Safety-Teilnehmer 12 noch keine Antwort erhalten hat und der FSoE-Safety-Teilnehmer 12 deshalb in Reaktion auf die Antwort noch keinen neuen Daten erzeugt hat.

Der EtherCAT-Slave-Controller 32 des EtherCAT/PROFINET-Gateways 3 liest beim Durchlauf des dritten EtherCAT-Datenpaketes E3 die zweiten Daten "FSoE-Message mit FSoE-Data" aus dem zugeordneten zweiten Datagrammfeld 160 im dritten EtherCAT-Datenpaket E3 aus. Anschließend trägt der EtherCAT-Slave-Controller 32 des EtherCAT/PROFINET-Gateways 3 dann die ersten Daten "FSoE-Message mit PROFIsafe-Data" in das zugeordnete zweite Datagrammfeld 160 des dritten EtherCAT-Datenpaketes E3 ein.

Die Verarbeitung der zweiten Daten "FSoE-Message mit FSoE-Data" erfolgt im EtherCAT/PROFINET Gateway 3 auf dieselbe Weise wie bei den ersten Daten "FSoE-Message mit FSoE-Data", um zweite Daten "PROFISafe-Message mit FSoE-Data" zu erzeugen, die dann für den PROFINET-Slave-Teilnehmer PROFIsafe-Safety-Teilnehmer 22 bestimmt sind.

Beim Durchlauf des dritten EtherCAT-Datenpaketes E3 trägt der FSoE-Safety-Teilnehmer 12 ferner dritte Daten "FSoE-Message mit FSoE-Data" in das zugeordnete erste Datagrammfeld 150 des dritten EtherCAT-Datenpaketes E3 ein. Die dritten Daten "FSoE-Message mit FSoE-Data" entsprechen dabei den ersten beziehungsweise zweiten Daten "FSoE-Message mit FSoE-Data", solange der FSoE-Safety-Teilnehmer 12 noch keine Antwort erhalten hat und der FSoE-Safety-Teilnehmer 12 deshalb in Reaktion auf die Antwort noch keinen neuen Daten erzeugt hat. Der EtherCAT-Master 11 empfängt dann das dritte EtherCAT-Datenpaket E3 im Rücklauf.

Aus dem dritten EtherCAT-Datenpaket E3 kopiert der EtherCAT-Master 11 die ersten Daten "FSoE-Message mit PROFIsafe-Data" als Lese-Daten für den EtherCAT-Slave-Teilnehmer FSoE-Safety-Teilnehmer 12 in das zugeordnete erste Datagrammfeld 150 eines vierten EtherCAT-Datenpaketes E4. Ferner überträgt der EtherCAT-Master 11 die dritten Daten "FSoE-Message mit FSoE-Data" aus dem dritten EtherCAT-Datenpaket E3 als Lese-Daten in das zweite Datagrammfeld 160 für den EtherCAT-Slave-Teilnehmer EtherCAT/PROFINET-Gateway 3 im vierten EtherCAT-Datenpaket E4.

Der EtherCAT-Master 11 sendet das vierte EtherCAT-Datenpaket E4 an die EtherCAT-Slave-Teilnehmer FSoE-Safety-Teilnehmer 12 und EtherCAT/PROFINET-Gateway 3.

Beim Durchlauf des vierten EtherCAT-Datenpaketes E4 liest der EtherCAT-Slave-Teilnehmer FSoE-Safety-Teilnehmer 12 die ersten Daten "FSoE-Message mit PROFIsafe-Data" aus dem zugeordneten ersten Datagrammfeld 150 des vierten EtherCAT-Datenpaketes E4 aus. Anschließend trägt der FSoE-Safety-Teilnehmer 12 dann vierte Daten "FSoE-Message mit FSoE-Data" in das zugeordnete erste Datagrammfeld 150 des vierten EtherCAT-Datenpaketes E4 ein. Die vierten Daten "FSoE-Message mit FSoE-Data" entsprechen dabei den ersten beziehungsweise zweiten beziehungsweise dritten Daten "FSoE-Message mit FSoE-Data", solange der FSoE-Safety-Teilnehmer 12 noch keine Antwort erhalten hat und der FSoE-Safety-Teilnehmer 12 deshalb in Reaktion auf die Antwort noch keinen neuen Daten erzeugt hat.

Weiterhin liest der EtherCAT-Slave-Controller 32 des EtherCAT/PROFINET-Gateways 3 beim Durchlauf des vierten EtherCAT-Datenpaketes E4 die dritten Daten "FSoE-Message mit FSoE-Data" aus dem zugeordneten zweiten Datagrammfeld 160 im vierten EtherCAT-Datenpaket E4 aus. Die Verarbeitung der dritten Daten "FSoE-Message mit FSoE-Data" erfolgt im EtherCAT/PROFINET Gateway 3 auf dieselbe Weise wie bei den ersten Daten "FSoE-Message mit FSoE-Data", um dritte Daten "PROFISafe-Message mit FSoE-Data" zu erzeugen, die dann für den PROFINET-Slave-Teilnehmer PROFIsafe-Safety-Teilnehmer 22 bestimmt sind.

Nach dem Auslesen der dritten Daten "FSoE-Message mit FSoE-Data" aus dem zugeordneten zweiten Datagrammfeld 160 im vierten EtherCAT-Datenpaket E4 trägt der EtherCAT-Slave-Controller 32 des EtherCAT/PROFINET-Gateways 3 zweite Daten "FSoE-Message mit PROFIsafe-Data" in das zugeordnete zweite Datagrammfeld 160 des vierten EtherCAT-Datenpaketes E4 ein. Das EtherCAT/PROFINET Gateway 3 hat die zweiten Daten "FSoE-Message mit PROFIsafe-Data" aus zweiten Daten "PROFIsafe-Message mit PROFIsafe-Data" erzeugt, die mit zwei weiteren PROFINET-Datenpaketen (nicht gezeigt) auf dieselbe Weise wie die ersten Daten "PROFIsafe-Message mit PROFIsafe-Data" vom PROFIsafe-Safety-Teilnehmer 22 über den PROFINET-Master 21 zum EtherCAT/PROFINET-Gateway 3 übertragen wurden.

Der EtherCAT-Master 11 empfängt das vierte EtherCAT-Datenpaket E4 dann mit den vierten Daten "FSoE-Message mit FSoE-Data" und den zweiten Daten "FSoE-Message mit PROFIsafe-Data". Die Datenübertragung zwischen dem FSoE-Safety-Teilnehmer 12 und dem PROFIsafe-Safety-Teilnehmer 22 wird dann in der anhand Fig. 3 und Fig. 4 erläuterten Weise fortgesetzt.

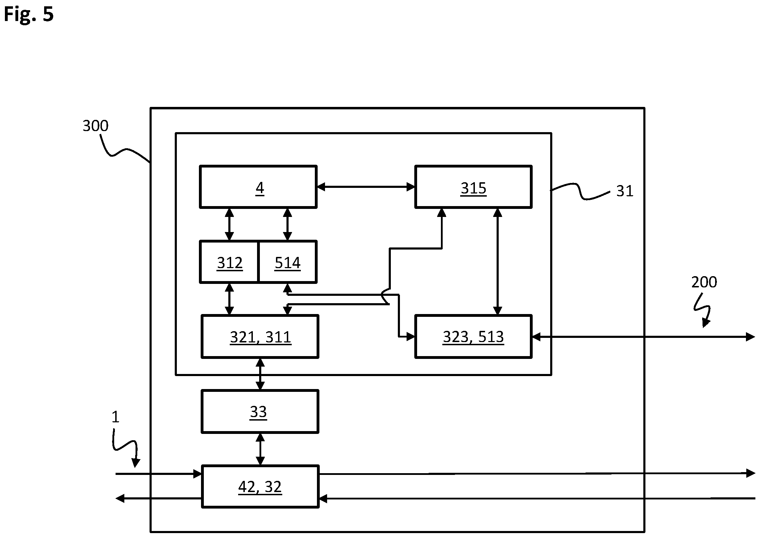

Fig. 5 zeigt eine Realisierung eines EtherCAT/IO-Link-Gateways 300 mit einer FSoE/IO-Link-Safety-Protokollumsetzung. Dabei sind die Komponenten des EtherCAT/IO-Link-Gateways 300, die Komponenten des in Fig. 2 gezeigten EtherCAT/PROFINET-Gateways 3 entsprechen, mit denselben Bezugszeichen versehen und werden im Folgenden nicht nochmals beschrieben.

Das EtherCAT/IO-Link-Gateway 300 ist mit einem auf dem Mikrocontroller 31 angeordneten einkanaligen Software-Modul IO-Link-Master-Funktionen 513 als Schnittstelle direkt an einen IO-Link-Netzwerk 200 angebunden, um Nachrichten mit einem IO-Link-Safety-Slave-Teilnehmer (nicht gezeigt) auszutauschen. Das einkanalige Software-Modul IO-Link-Master-Funktionen 513 arbeitet unter anderem als ein einkanaliges zweites Filter-Modul 323, um aus den vom IO-Link-Slave-Teilnehmer empfangenen Nachrichten IO-Link-Safety-Nachrichten zu ermitteln.

Das Software-Modul IO-Link-Master-Funktionen 513 ist weiter mit einem IO-Link-Safety-Speicher 514 verbunden, in dem die IO-Link-Safety-Nachrichten abgelegt werden. Der IO-Link-Safety-Speicher 514 hat außerdem eine Schnittstelle zum zweikanaligen Software-Modul Safety-Funktionen 4.

Bis zum Software-Modul Safety-Funktionen 4 liegt im EtherCAT/IO-Link-Gateway 300 ein Black Channel vor. Das Software-Modul Safety-Funktionen 4 kann dann Veränderungen an den IO-Link-Safety-Nachrichten erkennen. Das Software-Modul Safety-Funktionen 4 ist ferner ausgelegt, FSoE-Nachrichten in IO-Link-Safety-Nachrichten und IO-Link-Safety-Nachrichten in FSoE-Nachrichten umzuwandeln.

Das EtherCAT/IO-Link-Gateway 300 arbeitet bei der Umwandlung einer FSoE-Nachricht in eine IO-Link-Safety-Nachricht wie folgt: Eine FSoE-Nachricht in einem EtherCAT-Datenpaket wird vom EtherCAT-Slave-Controller 32 in den EtherCAT-Speicher 33 geschrieben, der die Schnittstelle zwischen dem EtherCAT-Slave-Controller 32 und dem Mikrocontroller 31 bildet. Aus dem EtherCAT-Speicher 33 wird die FSoE-Nachricht von dem einkanaligen Software-Modul EtherCAT-Slave-Funktionen 311 in den FSoE-Speicher 312 übertragen, der die Schnittstelle zum zweikanaligen Software-Modul Safety-Funktionen 4 bildet.

Bis zum zweikanaligen Software-Modul Safety-Funktionen 4 erstreckt sich der Black Channel, wobei das zweikanalige Safety-Modul Safety-Funktionen 4 Veränderungen an der FSoE-Nachricht erkennt. Das zweikanalige Software-Modul Safety-Funktionen 4 wandelt die FSoE-Nachricht in eine IO-Link-Safety Nachricht um und legt die IO-Link-Safety Nachricht in dem IO-Link-Safety-Speicher 514 ab, der die Schnittstelle zwischen dem zweikanaligen Software-Modul Safety-Funktionen 4 und dem einkanaligen Software-Modul IO-Link-Master Funktionen 513 bildet. Das einkanalige Software-Modul IO-Link-Master-Funktionen 513 liest die IO-Link-Safety-Nachricht aus dem IO-Link-Safety-Speicher 514 aus und sendet die IO-Link-Safety-Nachricht dann an den IO-Link-Safety-Slave-Teilnehmer.

Umgekehrt wird eine vom IO-Link-Safety-Slave-Teilnehmer gesendete IO-Link-Safety-Nachricht von dem einkanaligen Software-Modul IO-Link-Master-Funktionen 513 empfangen und in den IO-Link-Safety-Speicher 514 kopiert, der die Schnittstelle zum zweikanaligen Software-Modul Safety-Funktionen 4 bildet. Bis hierhin erstreckt sich der Black Channel, wobei das zweikanaligen Safety-Modul Safety-Funktionen 4 Veränderungen an der IO-Link-Safety-Nachricht erkennt.

Das zweikanalige Software-Modul Safety-Funktionen 4 wandelt die IO-Link-Safety-Nachricht in eine FSoE-Nachricht um und legt die FSoE-Nachricht in dem FSoE-Speicher 312 ab, der die Schnittstelle zwischen dem zweikanaligen Software-Modul Safety-Funktionen 4 und dem einkanaligen Software-Modul EtherCAT Slave Funktionen 311 bildet. Das einkanalige Software-Modul EtherCAT-Slave-Funktionen 311 kopiert die FSoE-Nachricht aus dem FSoE-Speicher 312 in den EtherCAT-Speicher 33, der die Schnittstelle zwischen EtherCAT-Slave-Controller 32 und dem einkanaligen Software-Modul EtherCAT Slave Funktionen 311 bildet.

Wenn ein EtherCAT-Datenpaket vom EtherCAT-Slave-Controller 32 empfangen wird, um den EtherCAT-Speicher 33 des EtherCAT/IO-Link-Gateway 300 zu lesen, wird die FSoE-Nachricht in das EtherCAT-Datenpaket vom EtherCAT-Slave-Controller 32 im Durchlauf eingefügt.

Das auf dem Mikroprozessor 31 vorgesehene Software-Modul Betriebsfunktions-Modul 315 sorgt dafür, dass das zweikanalige Software-Modul Safety Funktionen 4, das einkanalige Software-Modul IO-Link-Master Funktionen 513 sowie das einkanalige Modul EtherCAT Slave Funktionen 311 zyklisch aufgerufen werden.

Das EtherCAT/IO-Link-Gateway 300 ist als EtherCAT-Slave-Teilnehmer dargestellt. Das Sicherheits-Gateway könnte aber auch ein Teilnehmer eines anderen Feldbussystems sein, da das FSoE-Protokoll nicht auf die Übertragung auf dem EtherCAT-Feldbus eingeschränkt ist.

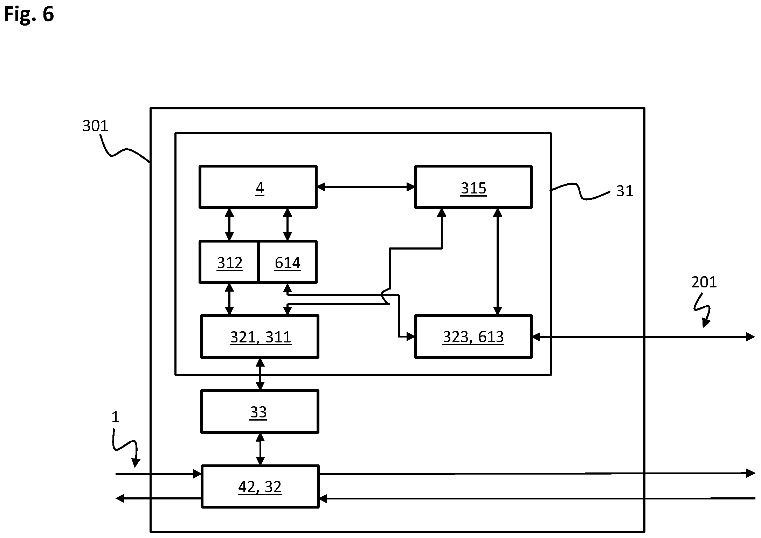

Fig. 6 den Aufbau eines Sicherheits-Gateways, das eine Umsetzung zwischen dem FSoE-Protokoll und einem Safety-Hardware-Protokoll ausführt. Dabei sind Komponenten, die Komponenten des in Fig. 2 gezeigten EtherCAT/PROFINET-Gateways 3 entsprechen, mit denselben Bezugszeichen versehen und werden im Folgenden nicht nochmals beschrieben.

Das im Weiteren als EtherCAT/Hardware-Gateway 301 bezeichneten Sicherheits-Gateway ist mit einem auf dem Mikrocontroller 31 angeordneten einkanaligen Software-Modul Standard-Funktionen 613 an eine Hardware 201 angeschlossen, um Nachrichten mit einem Hardware-Teilnehmer (nicht gezeigt) auszutauschen. Die Schnittstelle des Software-Moduls Standard Funktionen 613 zur Hardware 201 kann beispielsweise ein IO-Port, eine serielle Schnittstelle, ein Datenbus oder ein Feldbus sein.

Das einkanalige Software-Modul Standard-Funktionen 613 arbeitet unter anderem als ein einkanaliges zweites Filter-Modul 323, um aus den von dem Hardware-Teilnehmer empfangenen Nachrichten Safety-Nachrichten zu ermitteln. Das Software-Modul Standard Funktionen 613 kann ferner beliebige weitere nicht-sicherheitsrelevante Funktionen enthalten.

Das Software-Modul Standard Funktionen 613 ist weiter mit einem Safety-Speicher 614 verbunden, in dem die Safety-Nachrichten abgelegt werden. Der Safety-Speicher 614 hat außerdem eine Schnittstelle zum zweikanaligen Software-Modul Safety-Funktionen 4.

Bis zum Software-Modul Safety-Funktionen 4 erstreckt sich im EtherCAT/Hardware-Gateway 301 ein Black Channel. Das Software-Modul Safety-Funktionen 4 kann dann Veränderungen an den Safety-Nachrichten erkennen. Das Software-Modul Safety-Funktionen 4 ist ausgelegt, FSoE-Nachrichten in Safety-Nachrichten und Safety-Nachrichten in FSoE-Nachrichten umzuwandeln.

Es besteht die Möglichkeit, dass das Software-Modul Safety-Funktionen 4 zusätzlich eine Hardware-Schnittstelle (nicht gezeigt) besitzen. Auch kann vorgesehen sein, dass das Software-Modul Safety-Funktionen 4 beliebige Software-Funktionen ausführt. Die Software-Funktionen können dabei ähnlich bespielweise zu einer Safety-Logik auch konfigurierbar sein. Das Software-Modul Safety-Funktionen 4 kann dann Daten verarbeiten, die über die Hardware-Schnittstelle, von den anderen Software Modulen im Gateway oder über die FSoE-Nachricht empfangen beziehungsweise gesendet werden. Eine solche Ausgestaltung des Software-Modul Safety-Funktionen 4 ist auch bei den in Fig. 2 und Fig. 5 gezeigten Gateways möglich.

Das EtherCAT/Hardware-Gateway 301 arbeitet bei der Umwandlung einer FSoE-Nachricht in eine Safety-Nachricht wie folgt: Eine FSoE-Nachricht in einem EtherCAT-Datenpaket wird vom EtherCAT-Slave-Controller 32 in den EtherCAT-Speicher 33 geschrieben, der die Schnittstelle zwischen dem EtherCAT-Slave-Controller 32 und dem Mikrocontroller 31 bildet. Aus dem EtherCAT-Speicher 33 wird die FSoE-Nachricht von dem einkanaligen Software-Modul EtherCAT-Slave-Funktionen 311 in den FSoE-Speicher 312 übertragen, der die Schnittstelle zum zweikanaligen Software-Modul Safety-Funktionen 4 bildet.

Bis zum zweikanaligen Software-Modul Safety-Funktionen 4 erstreckt sich der Black Channel, wobei das zweikanalige Safety-Modul Safety-Funktionen 4 Veränderungen an der FSoE-Nachricht erkennt. Das zweikanalige Software-Modul Safety-Funktionen 4 wandelt die FSoE-Nachricht in eine Safety-Nachricht um und legt die Safety-Nachricht in dem Safety-Speicher 614 ab, der die Schnittstelle zwischen dem zweikanaligen Software-Modul Safety-Funktionen 4 und dem einkanaligen Software-Modul Standard Funktionen 613 bildet. Das einkanalige Software-Modul Standard Funktionen 613 liest die Safety-Nachricht aus dem Safety-Speicher 614 aus und sendet die Safety-Nachricht dann an den Hardware-Teilnehmer.

Umgekehrt wird eine vom Hardware-Teilnehmer gesendete Safety-Nachricht von dem einkanaligen Software-Modul Standard Funktionen 613 empfangen und in den Safety-Speicher 614 kopiert, der die Schnittstelle zum zweikanaligen Software-Modul Safety-Funktionen 4 bildet. Bis hierhin erstreckt sich der Black Channel, wobei das zweikanaligen Safety-Modul Safety-Funktionen 4 Veränderungen an der Safety-Nachricht erkennt.

Das zweikanalige Software-Modul Safety-Funktionen 4 wandelt die Safety-Nachricht in eine FSoE-Nachricht um und legt die FSoE-Nachricht in dem FSoE-Speicher 312 ab, der die Schnittstelle zwischen dem zweikanaligen Software-Modul Safety-Funktionen 4 und dem einkanaligen Software-Modul EtherCAT Slave Funktionen 311 bildet. Das einkanalige Software-Modul EtherCAT-Slave-Funktionen 311 kopiert die FSoE-Nachricht aus dem FSoE-Speicher 312 in den EtherCAT-Speicher 33, der die Schnittstelle zwischen EtherCAT-Slave-Controller 32 und dem einkanaligen Software-Modul EtherCAT Slave Funktionen 311 bildet.

Wenn ein EtherCAT-Datenpaket vom EtherCAT-Slave-Controller 32 empfangen wird, um den EtherCAT-Speicher 33 des EtherCAT/Hardware-Gateway 301 zu lesen, wird die FSoE-Nachricht in das EtherCAT-Datenpaket vom EtherCAT-Slave-Controller 32 im Durchlauf eingefügt.

Das auf dem Mikroprozessor 31 vorgesehene Software-Modul Betriebsfunktions-Modul 315 sorgt dafür, dass das zweikanalige Software-Modul Safety Funktionen 4, das einkanalige Software-Modul Standard Funktionen 613 sowie das einkanalige Modul EtherCAT Slave Funktionen 311 zyklisch aufgerufen werden.

Das EtherCAT/Hardware-Gateway 301 ist als EtherCAT-Slave-Teilnehmer dargestellt. Das Sicherheits-Gateway könnte aber auch ein Teilnehmer eines anderen Feldbussystems sein, da das FSoE-Protokoll nicht auf die Übertragung auf dem EtherCAT-Feldbus eingeschränkt ist.

## Patentansprüche

1. Protokollumsetzer (30) zum Umsetzen von sicherheitsrelevanten Nachrichten zwischen einem ersten Netzwerk (10) und einem zweiten Netzwerk (20), wobei das erste und zweite Netzwerk (10, 20) unterschiedliche Netzwerkprotokolle zum Nachrichtenaustausch verwenden und jeweils sicherheitsrelevante Teilnehmern und nicht-sicherheitsrelevante Teilnehmer eingebunden sind, und wobei das erste Netzwerk (10) wenigstens einen ersten sicherheitsrelevanten Teilnehmer (13) mit einer ersten Sicherheitskommunikationsschicht aufweist, die ein erstes Sicherheitskommunikationsprotokoll verarbeitet, und wobei das zweite Netzwerk (20) wenigstens einen zweiten sicherheitsrelevanten Teilnehmer (23) mit einer zweiten Sicherheitskommunikationsschicht aufweist, die ein zweites Sicherheitskommunikationsprotokoll verarbeiten, wobei das erste Netzwerk (10) nicht-sicherheitsrelevanten Nachrichten und sicherheitsrelevante Nachrichten mit dem ersten Sicherheitskommunikationsprotokoll und das zweite Netzwerk (20) nicht-sicherheitsrelevanten Nachrichten und sicherheitsrelevante Nachrichten mit dem zweiten Sicherheitskommunikationsprotokoll überträgt, umfassend
eine einkanalige Schnittstellen-Einrichtung, die einen Nachrichtenaustausch mit dem ersten Netzwerk (10) und/ oder mit dem zweiten Netzwerk (20) ermöglicht, ,
eine mit der Schnittstellen-Einrichtung verbundene einkanalige Filter-Modul-Einrichtung, um aus von der Schnittstellen-Einrichtung empfangenen Nachrichten sicherheitsrelevante Nachrichten mit dem ersten Sicherheitskommunikationsprotokoll und sicherheitsrelevante Nachrichten mit dem zweiten Sicherheitskommunikationsprotokoll zu ermitteln, und
ein mit der Filter-Modul-Einrichtung verbundenes wenigstens zweikanaliges Sicherheits-Modul (4), um von der Filter-Modul-Einrichtung ermittelten sicherheitsrelevante Nachrichten mit dem ersten Sicherheitskommunikationsprotokoll in sicherheitsrelevante Nachrichten mit dem zweiten Sicherheitskommunikationsprotokoll beziehungsweise um von der Filter-Modul-Einrichtung ermittelte sicherheitsrelevante Nachrichten mit dem zweiten Sicherheitskommunikationsprotokoll in sicherheitsrelevante Nachrichten mit dem ersten Sicherheitskommunikationsprotokoll umzusetzen.

2. Protokollumsetzer (30) nach Anspruch 1, wobei das Sicherheits-Modul (4) wenigstens zwei parallele Software-Funktionskanäle aufweist.

3. Protokollumsetzer (30) nach Anspruch 1 oder 2,
wobei die einkanalige Schnittstellen-Einrichtung eine einkanalige erste Schnittstelle (42), die einen Nachrichtenaustausch mit dem ersten Netzwerk (10) ermöglicht, das den wenigstens einen ersten sicherheitsrelevanten Teilnehmer (13) mit der ersten Sicherheitskommunikationsschicht aufweist, die das erste Sicherheitskommunikationsprotokoll verarbeitet, und eine einkanalige zweite Schnittstelle (44), die einen Nachrichtenaustausch mit dem zweiten Netzwerk (20) ermöglicht, das den wenigstens zweiten sicherheitsrelevanten Teilnehmer (23) mit der zweiten Sicherheitskommunikationsschicht aufweist, die das zweite Sicherheitskommunikationsprotokoll verarbeiten, aufweist,
wobei die Filter-Modul-Einrichtung ein einkanaliges erstes Filter-Modul (321), um aus von der ersten Schnittstelle (42) empfangenen Nachrichten sicherheitsrelevante Nachrichten mit dem ersten Sicherheitskommunikationsprotokoll zu ermitteln, und ein einkanaliges zweites Filter-Modul (323), um aus von der zweiten Schnittstelle (44) empfangenen Nachrichten sicherheitsrelevante Nachrichten mit dem zweiten Sicherheitskommunikationsprotokoll zu ermitteln, aufweist,
wobei das wenigstens zweikanalige Sicherheits-Modul (4) mit dem ersten und dem zweiten Filter-Modul (321, 323) verbunden ist, um vom ersten Filter-Modul (321) ermittelte sicherheitsrelevante Nachrichten mit dem ersten Sicherheitskommunikationsprotokoll in sicherheitsrelevante Nachrichten mit dem zweiten Sicherheitskommunikationsprotokoll beziehungsweise um vom zweiten Filter-Modul (323) ermittelte sicherheitsrelevante Nachrichten mit dem zweiten Sicherheitskommunikationsprotokoll in sicherheitsrelevante Nachrichten mit dem ersten Sicherheitskommunikationsprotokoll umzusetzen.

4. Protokollumsetzer (30) nach Anspruch 3, wobei die erste und/oder zweite Schnittstelle (42, 44) einen Bus-Controller für einen Feldbus, eine serielle Schnittstelle für eine Punkt-zu-Punkt-Verbindung oder einen Dual-Port-RAM-Speicher für einen Datenbus aufweist.

5. Protokollumsetzer (30) nach Anspruch 3 oder 4, wobei die erste und/oder zweite Filter-Modul-Einrichtung (321, 323) weitere nicht-sicherheitsrelevante Funktionen umfasst.

6. Protokollumsetzer (30) nach einem der Ansprüche 1 bis 5, wobei das Sicherheits-Modul (4) weitere sicherheitsrelevante Funktionen umfasst.

7. Protokollumsetzer (30) nach einem der Ansprüche 1 bis 6, umfassend ein mit der Filter-Modul-Einrichtung und dem Sicherheits-Modul (4) verbundenes einkanaliges Betriebsfunktions-Modul, um die Filter-Modul-Einrichtung und das Sicherheits-Modul (4) zyklisch aufzurufen.

8. Automatisierungssystem mit einem ersten Netzwerk (10) und einem zweiten Netzwerk (20), die unterschiedliche Netzwerkprotokolle verwenden und jeweils sicherheitsrelevante Teilnehmern und nicht-sicherheitsrelevante Teilnehmer eingebunden sind,
wobei das erste Netzwerk (10) wenigstens einen ersten sicherheitsrelevanten Teilnehmer (13) mit einer ersten Sicherheitskommunikationsschicht aufweist, die ein erstes Sicherheitskommunikationsprotokoll verarbeitet,
wobei das zweite Netzwerk (20) wenigstens einen zweiten sicherheitsrelevanten Teilnehmer (23) mit einer zweiten Sicherheitskommunikationsschicht aufweist, die ein zweites Sicherheitskommunikationsprotokoll verarbeitet,
wobei das erste Netzwerk (10) nicht-sicherheitsrelevanten Nachrichten und sicherheitsrelevante Nachrichten mit dem ersten Sicherheitskommunikationsprotokoll und das zweite Netzwerk (20) nicht-sicherheitsrelevanten Nachrichten und sicherheitsrelevante Nachrichten mit dem zweiten Sicherheitskommunikationsprotokoll überträgt,
wobei zwischen dem ersten Netzwerk (10) und dem zweiten Netzwerk (20) ein Protokollumsetzer (30) gemäß einem der Ansprüche 1 bis 7 vorgesehen ist.

## Claims

1. A protocol converter (30) for converting safety-relevant messages between a first network (10) and a second network (20), wherein the first and second networks (10, 20) use different network protocols for message exchange and safety-relevant subscribers and non-safety-relevant subscribers are integrated in each case, and wherein the first network (10) comprises at least one first safety-relevant subscriber (13) having a first safety communication layer which processes a first safety communication protocol, and wherein the second network (20) comprises at least one second safety-relevant subscriber (23) having a second safety communication layer which processes a second safety communication protocol, wherein the first network (10) transmits non-safety-relevant messages and safety-relevant messages with the first safety communication protocol and the second network (20) transmits non-safety-relevant messages and safety-relevant messages with the second safety communication protocol, comprising
a single-channel interface device allowing for message exchange with the first network (10) and/or with the second network (20),
a single-channel filter module device connected to the interface device for determining safety-relevant messages with the first safety communication protocol and safety-relevant messages with the second safety communication protocol from messages received by the interface device, and
an at least dual-channel safety module (4) connected to the filter module device for converting safety-relevant messages with the first safety communication protocol detected by the filter module device into safety-relevant messages with the second safety communication protocol or, respectively, for converting safety-relevant messages with the second safety communication protocol detected by the filter module device into safety-relevant messages with the first safety communication protocol.

2. The protocol converter (30) according to claim 1, wherein the safety module (4) comprises at least two parallel software function channels.

3. The protocol converter (30) according to claim 1 or 2,
wherein said single-channel interface device comprises a single-channel first interface (42) allowing for message exchange with the first network (10) comprising the at least first safety-relevant subscriber (13) with said first safety communication layer processing the first safety communication protocol, and a single-channel second interface (44) allowing message exchange with the second network (20) comprising the at least second safety-relevant subscriber (23) with the second safety communication layer processing the second safety communication protocol,
wherein the filter module device comprises a single-channel first filter module (321) to determine safety-relevant messages with said first safety communication protocol from messages received from the first interface (42), and a single-channel second filter module (323) to determine safety-relevant messages with the second safety communication protocol from messages received from the second interface (44),
wherein the at least dual-channel safety module (4) is connected to the first and second filter modules (321,323) to convert safety-relevant messages with the first safety communication protocol detected by the first filter module (231) into messages with the second safety communication protocol or, respectively, to convert safety-relevant messages with the second safety communication protocol detected by the second filter module (233) into safety-relevant messages with the first safety communication protocol.

4. The protocol converter (30) according to claim 3, wherein the first and/or second interface (42, 44) comprises a bus controller for a field bus, a serial interface for a point-to-point connection or a dual-port RAM memory for a data bus.

5. The protocol converter (30) according to claim 3 or 4, wherein the first and/or second filter module device (321, 323) comprises further non-safety-relevant functions.

6. The protocol converter (30) according to any one of claims 1 to 5, wherein the safety module (4) comprises further safety-relevant functions.

7. The protocol converter (30) according to any one of claims 1 to 6, comprising a single channel operational function module connected to the filter module device and the safety module (4) in order to cyclically invoke the filter module device and the safety module (4).

8. An automation system comprising a first network (10) and a second network (20) using different network protocols and in which safety-relevant subscribers and non-safety-relevant subscribers are integrated in each case,,
wherein the first network (10) comprises at least one first safety-relevant subscriber (13) with a first safety communication layer processing a first safety communication protocol, wherein the second network (20) comprises at least one second safety-relevant subscriber (23) with a second safety communication layer processing a second safety communication protocol,
wherein the first network (10) transmits non-safety-relevant messages and safety-relevant messages with the first safety communication protocol and the second network (20) transmits non-safety-relevant messages and safety-relevant messages with the second safety communication protocol,
wherein between the first network (10) and the second network (20) a protocol converter (30) according to any one of claims 1 to 7 is provided.

## Revendications

1. Convertisseur de protocole (30) pour convertir des messages relevant de la sécurité entre un premier réseau (10) et un deuxième réseau (20), dans lequel les premier et deuxième réseaux (10, 20) utilisent différents protocoles de réseau pour l'échange de messages et dans lequel des participants relevant de la sécurité et des participants ne relevant pas de la sécurité sont respectivement intégrés, et dans lequel le premier réseau (10) comprend au moins un premier participant relevant de la sécurité (13) avec une première couche de communication de sécurité qui traite un premier protocole de communication de sécurité, et dans lequel le deuxième réseau (20) comprend au moins un deuxième participant relevant de la sécurité (23) avec une deuxième couche de communication de sécurité, qui traite un deuxième protocole de communication de sécurité, dans lequel le premier réseau (10) transmet des messages ne relevant pas de la sécurité et des messages relevant de la sécurité avec le premier protocole de communication de sécurité, et le deuxième réseau (20) transmet des messages ne relevant pas de la sécurité et des messages relevant de la sécurité avec le deuxième protocole de communication de sécurité, comprenant
un dispositif d'interface à un canal permettant un échange de messages avec le premier réseau (10) et/ou avec le deuxième réseau (20),
un dispositif à module de filtrage à un canal, relié au dispositif d'interface, pour déterminer, à partir de messages reçus par le dispositif d'interface, des messages relevant de la sécurité avec le premier protocole de communication de sécurité et des messages relevant de la sécurité avec le deuxième protocole de communication de sécurité, et
un dispositif à module de sécurité (4) à au moins deux canaux relié au dispositif à module de filtrage, pour convertir des messages relevant de la sécurité déterminés par le dispositif à module de filtrage avec le premier protocole de communication de sécurité en des messages relevant de la sécurité avec le deuxième protocole de communication de sécurité ou pour convertir des messages relevant de la sécurité déterminés par le dispositif à module de filtrage avec le deuxième protocole de communication de sécurité en des messages relevant de la sécurité avec le premier protocole de communication de sécurité.

2. Convertisseur de protocole (30) selon la revendication 1, dans lequel le module de sécurité (4) comporte au moins deux canaux à fonction logicielle parallèles.

3. Convertisseur de protocole (30) selon la revendication 1 ou 2,
dans lequel le dispositif d'interface à un canal comprend une première interface à un canal (42) qui permet un échange de messages avec le premier réseau (10), comprenant ledit au moins un premier participant relevant de la sécurité (13) avec la première couche de communication de sécurité qui traite le premier protocole de communication de sécurité, et une deuxième interface à un canal (44) qui permet un échange de messages avec le deuxième réseau (20), comprenant ledit au moins un deuxième participant relevant de la sécurité (23) avec la deuxième couche de communication de sécurité, qui traite le deuxième protocole de communication de sécurité,
dans lequel le dispositif à module de filtrage comprend un premier module de filtrage à un canal (321) pour déterminer, à partir de messages reçus de la première interface (42), des messages relevant de la sécurité avec le premier protocole de communication de sécurité, et un deuxième module de filtrage à un canal (323) pour déterminer, à partir de messages reçus de la deuxième interface (44), des messages relevant de la sécurité avec le deuxième protocole de communication de sécurité,
dans lequel le module de sécurité (4) à au moins deux canaux est relié aux premier et deuxième modules de filtrage (321, 323) pour convertir des messages relevant de la sécurité déterminés par le premier module de filtrage (321) avec le premier protocole de communication de sécurité en des messages relevant de la sécurité avec le deuxième protocole de communication de sécurité ou pour convertir des messages relevant de la sécurité déterminés par le deuxième module de filtrage (323) avec le deuxième protocole de communication de sécurité en des messages relevant de la sécurité avec le premier protocole de communication de sécurité.

4. Convertisseur de protocole (30) selon la revendication 3, dans lequel la première et/ou la deuxième interface (42, 44) comprend un contrôleur de bus pour un bus de terrain, une interface série pour une connexion point à point ou une mémoire RAM à double accès pour un bus de données.

5. Convertisseur de protocole (30) selon la revendication 3 ou 4, dans lequel le premier et/ou le deuxième dispositif à module de filtrage (321, 323) comprend d'autres fonctions ne relevant pas de la sécurité.

6. Convertisseur de protocole (30) selon l'une des revendications 1 à 5, dans lequel le module de sécurité (4) comprend d'autres fonctions relevant de la sécurité.

7. Convertisseur de protocole (30) selon l'une des revendications 1 à 6, comprenant un module à fonction d'exploitation à un canal relié au dispositif à module de filtrage et au module de sécurité (4) pour appeler de manière cyclique le dispositif à module de filtrage et le module de sécurité (4).

8. Système d'automatisation comportant un premier réseau (10) et un deuxième réseau (20) qui utilisent différents protocoles de réseau et qui intègrent respectivement des participants relevant de la sécurité et des participants ne relevant pas de la sécurité,
dans lequel le premier réseau (10) comprend au moins un premier participant relevant de la sécurité (13) avec une première couche de communication de sécurité qui traite un premier protocole de communication de sécurité,
dans lequel le deuxième réseau (20) comprend au moins un deuxième participant relevant de la sécurité (23) avec une deuxième couche de communication de sécurité qui traite un deuxième protocole de communication de sécurité,
dans lequel le premier réseau (10) transmet des messages ne relevant pas de la sécurité et des messages relevant de la sécurité avec le premier protocole de communication de sécurité, et le deuxième réseau (20) transmet des messages ne relevant pas de la sécurité et des messages relevant de la sécurité avec le deuxième protocole de communication de sécurité,
dans lequel il est prévu entre le premier réseau (10) et le deuxième réseau (20) un convertisseur de protocole (30) selon l'une des revendications 1 à 7.
